# EUROPÄISCHE PATENTANMELDUNG

(11) **EP 1 724 003 A2**
(43) Veröffentlichungstag der Anmeldung: **22.11.2006**
(21) Anmeldenummer: 06018820.8
(22) Anmeldetag: 04.01.2001
(51) Int. Cl.: B01F 5/04, B29C 45/18, F02M 47/00

(54) **Anwendung eines Verfahrens sowie Verwendung einer Vorrichtung zum Einbringen eines Zuschlagstoffs in ein strömendes Medium**

(30) Priorität: 10.01.2000 AT 192000; 07.06.2000 AT 9952000; 28.08.2000 AT 14752000; 15.11.2000 AT 19292000
(62) Teilanmeldung aus: 01901005.7
(71) Anmelder: Ickinger, Dr., Georg, 8010 Graz (AT)
(72) Erfinder: Ickinger, Georg, Dr., 8010 Graz (AT)
(74) Vertreter: Ehrsam, Christian

(57) **Zusammenfassung**

Die Anwendung eines Verfahrens zum Einbringen mindestens eines Zuschlagstoffs in ein Medium, durchgeführt in einer Anlage, in der das Medium strömt, dient zu
- einer Herstellung von Pellets aus einer extrudierbaren Stoffmasse,
- einer Verbrennung eines Brennstoffs in einem Luftstrom,
- einem Farbspritzen mit einem Farbstoff transportierenden Luftstrom,
- einer Herstellung von geschäumtem Metall aus einer extrudierbaren Metallschmelze. Dabei liegt jeweils eine Verwendung der Anlage vor, in der das strömende Medium durch die extrudierbare Stoffmasse, die Luft für den Brennstoff, die Luft mit dem oder für den Farbstoff bzw. die Metallschmelze gebildet ist. Das Verfahren wird unter Verwendung von mindestens einem Injektor durchgeführt, mit dem der Zuschlagstoff bzw. einer der Zuschlagstoffe mit einem Druck grösser als 40 MPa durch pulsierende Einspritzung in das Medium in Relation zu dessen Volumenstrom dosiert wird. Jeder Injektor umfasst mindestens eine Düse, in der eine Düsennadel mit einer Nadelsteuerung, eine vorgegebene Pulsfrequenz und Spritzdauer bewirkend, gesteuert bewegt wird. Der Zuschlagstoff wird in den Injektor unter einem Druck eingespeist, bei dem der Zuschlagstoff aus jeder Düse so tief in das strömende Medium eindringt, dass eine weitgehend homogene Durchmischung erzielbar ist. Die Nadelsteuerung wird wahlweise mit einem der folgenden Mitteln ausgeführt: mittels einem elektro-hydraulischen, mit Solenoid betätigten Servoventil, mittels einem piezoelektrischen Aktuator, mittels pneumatischen Mitteln, mittels hydraulischen Mitteln, mittels einem Magnetfeld, das die Düsennadel von Aussen betätigt, oder mittels einem Linearantrieb, der die Düsennadel antreibt.

## Beschreibung

Die Erfindung betrifft eine Anwendung eines Verfahrens sowie Verwendung einer Vorrichtung zum Einbringen eines Zuschlagstoffs in ein strömendes Medium unter Verwendung eines Injektors.

In der US-A- 4 770 198 ist ein Verfahren (sowie eine entsprechende Vorrichtung) offenbart, gemäss dem eine erste Flüssigkeit unter einem Überdruck einer zweiten Flüssigkeit intermittierend und mit vorgegebenen Mengen zugemischt wird. Steuermittel für eine intermittierende Einspeisung umfassen nur Komponenten, die ausserhalb einer Einspeisedüse angeordnet sind.

Ein Verfahren sowie eine entsprechende Vorrichtung zur Regelung der Konzentration einer dispersen Phase in einer Emulsion oder Suspension, wobei die beizumischende disperse Phase mittels einer Injektionsleitung über eine pulsierende Strömung zugeführt wird, ist aus der DE-A-3838139 bekannt.

In der US-A- 4 182 601 ist eine Vorrichtung beschrieben, mit der ein Zuschlagstoff kontinuierlich in eine strömende Kunststoffschmelze eingespritzt wird.

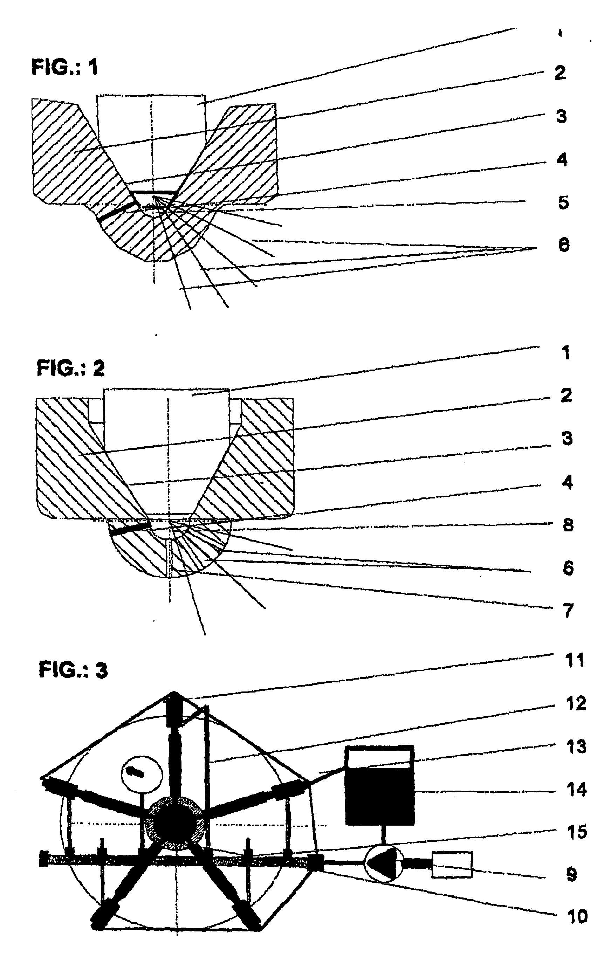

Die EP-A- 0 137 250 offenbart eine Mehrstoffdüse, in der Ströme von zwei oder mehr fliessfähigen Komponenten innerhalb der Düse zu einem reaktiven Gemisch zusammengeführt werden. Ein Zuschlagstoff (Treibmittel) wird in einem Ausführungsbeispiel (Fig. 1 und 2) durch einen Seitenkanal kontinuierlich in eine der fliessfähigen Komponenten eingespeist.

Bei der Anwendung eines Verfahrens gemäss der Erfindung sowie einer entsprechenden Verwendung einer Vorrichtung zum Einbringen eines Zuschlagstoffs erfolgt eine Vermischung durch das Eindringen eines Einspritzstrahls in das strömende Medium. Die erfindungsgemässe Anwendung wird durch den Anspruch 1 definiert. Die abhängigen Ansprüche 2 bis 5 betreffen vorteilhafte Ausführungsformen dieser Anwendung. Gegenstand der Ansprüche 6 bis 15 ist die erfindungsgemässe Verwendung.

Nachfolgend wird die Erfindung anhand weiterer Hinweise auf den Stand der Technik und anhand in Zeichnungen dargestellten Ausführungsformen erläutert. Dabei ist diese Beschreibung eine Zusammenstellung der Texte von vier Prioritätsanmeldungen.

### Wesentliche Erfindungsgedanke:

Der wesentlicher neue Gedanke dieses vorliegenden Verfahren besteht darin, daß bei höchst möglicher kinetische Energie die Zuschlagstoffe bei genau getaktetem Pulsieren und exakter Spritzdauer der Injektoren gute Zerstäubung, Durchmischung und tiefes, statistisch gut verteiltes Eindringen der Zuschlagstoffe in den Medienstrom möglich gemacht wird.
Die genaue Dosierung der Zuschlagstoffe erfolgt mittels Regelung der Betriebsgrößen bei der Einbringung wie zum Beispiel, Druck, Frequenz, Pulsdauer usw..
Bei den Verbrennungskraftmaschinen ist die "Common Rail" Einspritzung Stand der Technik. Die Flexibilität bei Veränderung der Betriebsparameter ist der Hauptnutzen dieser Technik gegenüber mechanischen Einspritzverfahren wie Pumpedüse usw.
Durch hohe Drücke bis ca. 200 MPa wird Brennstoff mittels "Druckschiene" bis an die Düse gebracht und dort durch elektronische Steuerung der selenoid- oder pieziogesteuerten elektrohydraulischen Servoventile die Düsennadel präzise betätigt. Auf diese Weise wird die genaue Dosierung und homogene Verteilung erzielt.
Die Anwendung und Ausweitung dieser Einspritztechnik ist Gegenstand zur Nutzung dieser verbesserten Technologie auch für weiterer Anwendungen, die im Wesentlichen schon eingangs erwähnt wurden.
Ausführlich wird auf die Gestaltung der Düsen und Düsennadel, die Anordnung der Austrittsbohrungen in Lage und Form und die Anordnung der Injektoren eingegangen

### Stand der Technik über das Verfahren zum Einbringen von Zuschlagstoffen.

Folgende Vorrichtungen und Verfahren sind Gegenstand zur Lösung der obigen Aufgaben:
EP161614 WOLTON FRANK 1985 hat eine Vorrichtung zum Einspritzen von dosierten Mengen in einen Flüssigkeitsstrom entwickelt. Die Beimengung der Zuschlagstoffe wird mittels einer Chargierpumpe gesteuert, die vom vorbeiströmenden Medium betätigt wird.
   Eine energetische Durchmischung liegt bei dieser Vorrichtung nicht vor, da nur geringe Druckunterschiede möglich sind.
Die Vorrichtung zum Einbringen von Additiven in den Flüssigkeitsstrom von hoher Viskosität wird in US 5913324 SIGNER ARNO 1997 vorgestellt.
   Mittels Blenden werden die hohen Scherkräfte des hochviskosen Mediums genutzt um eine Durchmischung durchzuführen,
   Eine Dosierung ist nur im Nebenstrang und unabhängig von der Hauptflußmenge möglich.
Die Vorrichtung zum Einbringen von Additiven in Flüssigkeitsstrom wird in EP0432336 CLOUP PHILLIP 1991 vorgestellt.
Für die Einbringung von Zusatzstoffen nach der Plastifiziereinrichtung sind folgende Verfahren bekannt:
   WO89053226 HETTINGA SIEBOLT 1988
   Lufteinblasung
US4931236 HETTINGA SIEBOLT 1989
   Geschäumter Schlauch mittels Eindüsung von Luft/Gas nach der Piastifiziereinrichtung.
DE1948454 BAYER 1971
   Einspritzen von chemischen Schaumbildner nach der Plastifiziereinheit.

Eine Durchmischung mittels energetischem Einspritzstrahl und pulsierende Dosierung ist in diesen letztgenannten Anmeldung nicht beabsichtigt.

Ein pulsierende Düse für das Aufbringen von Klebstoffen wird in US 5934521 KOIKE KATSUHIKO 1998 vorgestellt. Die Düsennadel wird mittels pneumatischen Zylinder auf und ab bewegt, sodaß Klebstoff in pulsförmigen Mengen austritt, Ein Durchmischung mit einem fließenden Medium ist nicht vorgesehen.
Pulsierende Einbringung von Flüssigkeiten in Gas sind Stand der Technik bei Brennern, Airless Spritzgeräten und Sprühgeräten (Atomizem).
Die vorliegende Erfindung grenzt sich von diesen Anwendungen dadurch ab, daß die Flüssigkeit mittels Hochdruck größer als 40MPa hochenergetische Zerstäubung, möglich macht und diese Drücke mit den bisher verwendeten Düsen nicht verarbeitet werden können. Erst die elektrisch betätigten hydraulischen Servo-unterstützen common rail injectoren sind für diese Pulsierung geeignet.

### Beschreibung und wirtschaftlicher Nutzen des Verfahrens:

### Einbringung in den Kunststoff Schmelzestrom:

Die Einbringung erfolgt erst nach der Plastifiziereinheit.
Dies hat für folgende Produktionsverfahren Vorteile.

### Mehrere unterschiedliche Werkstoffe aus nur einer Plastifiziereinrichtung

Bei Spritzgleßmaschinen wird bei variabler Einbringung vorbestimmte Eigenschaften, wie Porosität, Farbgebung nun Verfahrensschritte möglich, die sonst nur mit Mehrfarbenmaschinen durchgeführt werden.

Bei Extrusionsmaschinen werden mittels nur einer Plastifiziereinheit Profile extrudiert, wobei vorbestimmte Querschnitte ausgeschäumt werden, Indem nach Teilung des Materialstromes vorbestimmte Bereiche mit Gasbildnern aus einem Injektor beaufschlagt werden und diese nach Expansion In die extrudierten Profilquerschnitte eingeleitet werden.

Kunststoffe für Platten und Rohrextruder werden erst nach der Plastifiziereinheit mit Farbstoff, Gasbildner, Weichmacher beaufschlagt, wobei ein rascher Wechsel der Materialeigenschaften zu wirtschaftlicher Flexibiltät führt.

Pelletiermaschinen in der Nahrungsmittelindustrie werden nach dem Extruder mit Injektoren bestückt, sodaß Geschmacksstoffe Zusatzstoffe ohne Durchlaufen der Schnecken im Ganzen eingebracht werden.

Chemischer oder verfahrenstechnischer Anlagen wie beispielsweise Destillations-, Wasseraufbereltungsanlagen, und Raffinerien.
Die Einbringen, Dosieren und homogene Verteilung von Bleichmitteln, Lösungsmittel in den Kreislauf von Anlagen für Zell-, Zellulose- und Homogenstoffe erfolgt im derzeitigen Stand der Technik die Produktionmethoden das Einbringen der Zuschlagstoffe In eigenen Dosieranlagen mit nachfolgendem Mischer vor.
Dies hat wegen der hohen Scherkräfte eine gute Durchmischung zur Folge, hat jedoch den Nachteil, daß Veränderungen der Zuschlagsmenge oder Wechsel der Farben bzw. der chemischen Zusätze erst nach Durchlauf mehrer Chargen homogen möglich wird.

### Verfahren zum Einbringen von Zuschlagstoffen

### genaue Dosierung und homogene Verteilung

### Beschreibung

Die vorliegende Einrichtung hat sich zur Aufgabe gestellt. In den Schmelzestrom von Kunststoffen und niedrig schmelzenden Metallen gasbildende Substanz einzubringen.

Der Vorteil dieser Einrichtung liegt darin, daß die Strukturen des Werkstückes dort im Leichtbau ausgeführt werden, wo diese erforderlich sind. Die gasbildende Substanz zur Expansion des Matrix-Materials wird an örtlich vorgesehenen Stellen eingebracht. Vielfältige Betriebsarten *und deren Kombinationen* sind erstens durch die Druckdifferenz zwischen Schmelze und gasbildender Substanz, zweitens durch die Frequenz der Pulslerung und drittens durch die Form von Düse und Schmeizkanal einstellbar:

### Schaumbildung:

bei hochfrequenter Pulsierung und somit Zerstäubung mit hoher Druckdifferenz und
vorteilhaft im Gegenstrom und starker Beschleunigung der Schmelze durch Querschnittsveränderung, Die Geschwindigkeitsdifferenz der Medien wird hoch gewählt.

### Makro- Hohlzellen:

Tröpfchenförmige Dotierung der Schmelze durch niederfrequente Pulsierung und bei geringer Druckdifferenz im Gleichstrom und gleichförmiger Strömung von gasbildender Substanz und der Schmelze.

### Strangeinbringung:

Stetige Einbringung eines fadenförmigen Stranges aus gasbildender Substanz in den nahezu mit gleicher Geschwindigkeit vorbeiströmenden Schmelze. Geringe Druckdifferenz ist vorteilhaft.

Eine Vorrichtung zum Spritzgießen von Kunststoffverbundtellen mit injektionsdüse, die an eine Pumpe angeschlossen ist, die mit einem Treibmitteltank verbunden ist, wurde in der Offeniegungsschrift DE1948454 von BAYER 1971 örtlich vorbestimmte Schäumung vorgeschlagen.
Wegen der unzureichenden Durchmischung hat diese Einrichtung nicht die gewünschte Schaumbildung erzeugt.

Die vorliegende Einrichtung grenzt sich durch Verwendung von Injektoren (zusammengesetzte Düse und Ventil) und pulsierende Injektion und wahlweise durch Verwendung einer gemeinsamen druckführenden Leitung "common rail technology" und hydro-elektrischer Betätigung der Ventile, durch hydrodynamisch geformte Düsen und Anströmkanäle im Düsenbereich und durch eine Drucksteuerung von dieser Offenlegung ab.
Die Betätigung des Selenoids erfolgt durch elektrische Versorgung, die wahlweise eine Generierung von frei gestaltbaren Wellenformen ermöglicht, "arbitrary wave form generator".
Dadurch kommt es zu Betriebsarten wie Zerstäubung, Dotierung und Strangeinbringung. Die Wahl der Druckdifferenz und der Frequenz der Pulsierung führen zu gewünschten Einbringung der gasbildenden Substanz in die Schmelze,
Die genaue Dosierbarkeit und Drucksteuerung führt zu gezielter Dotierung von Tropfen in der Schmelze, die anschließend zu Makro-Hohlzellen expandieren.

Die Vorrichtung zur Einbringung der gasbildenden Substanz in die unter hohen Druck stehende Schmelze besteht aus einer injektionsdüse in unmittelbarer Verbindung mit dem Steuerventil (Injektor), oder aus einem angeschlossenen pulsierenden Pumpenelement mit Verschlußventil an der Spitze (Pumpe-Düse).

insbesondere ist die Einspritztechnik bei Dieselmotoren bereits Stand der Technik, durch strenge Abgasvorschriften hoch entwickelt und von genauer Wiederholbarkeit,

Stand der Technik ist ein "fuel-injection valves for intemal combustion engines" DE2028442, 1970 von DAIMLER BENZ. Die hydraulische Betätigung des Ventils erfolgt durch Dreiwegventile.

Ein "Injection device" mit hydroelektrischer Betätigung wurd 1971 von PEUQUEOT in FR2145081 vorgestellt, Die Ventilbetätigung erfolgt durch ständigen Hydraulikdruck an der Spitze und geregelten Druckabfall an der Rückseite des Stößels.

In US3990422 aus 1973 von BENDIX CORP sind Steuerung und elektro-hydraulische Betätigung verfeinert, Die Steuerung der Ventile erfolgt durch Zweikreis Kontroll Hydraulik.

Die oben genannten Injektoren weisen jene Merkmale auf, die zur Erfüllung der vorliegenden Aufgabenstellung notwendig sind. Diese sind Druckanpassung, elektrohydraulische Betätigung des Stößel-Steuer-Ventils, Kugelventil an der Hochdruckseite, die zur hochfrequenten Pulsierung notwendig sind, und die Heranbringung des Hochdruckes bis zum Ventilsitz, der unmittelbar an der Düse liegt (common rail), um eine genaue Druck- und Geschwindigkeitsdifferenz zwischen gasbildender Substanz und Schmelze herzustellen,
Die vorliegende Erfindung hat sich zur Aufgabe gestellt, diese Hochdruck-Technologie zu verwenden und durch Adaptierungen diese für den Bedarfsfall der Einspritzung in eine Schmelze nutzbar zu machen.
Für injektoren im Verbrennungsraum wird der hohe Druckunterschied zur Zerstäubung und Verteilung des Kraftstoffes genutzt. Für den Anwendungsfall für Schmelzen ist Druck von 100 bis 140 Mpa der Schmelze zu überwinden. Drücke bis zu 200 MPa werden mittels Injektoren mit gemeinsamer, Hochdruck Zuleitung (common rail) erzielt. Die ständige Versorgung der Injektoren mit diesen Drücken bis zum Ventil und die Betätigung der Ventile bei diesen Drücken sind gelöst und Stand der Technik,
Wesentliche Voraussetzung für diese Injektoren ist die Schmierfähigkeit der Kraftstoffe.
Die gasbildenden Substanzen (Wasser, Alkohol, flüssige Gase) haben im allgemeinen Jedoch keinerlei Schmierwirkung.
Wesentilcher Erfindungsgedanke Ist die Verwendung von zwei Kreisläufen, wobei handelsübliche Injektoren durch Zusatzmaßnahmen verwendet werden.
Im Patent JP 8170569 von NIPPON SOKEN 1994 ist eine Ausführung eines Injektors für Dieselmotore mit einem ständig druckführenden Hochdruckbereich und einem Niederdruck Steuermedium angeführt.
Die vorliegende Vorrichtung erzielt mittels Trennung der hydro-elektrischen Betätigung der Ventile mit standardmäßigem Hydrauliköl und Einbringung der gasbildenden Substanzen mit etwas geringer eingestelltem Druck (also umgekehrt wie bei JP 8170569) als jener des Steuerung-Hydraulköles eine Sperrwirkung im Stößel der Nadel sodaß kein Einspritzmedium in die Steuerhydraulik eindringen kann, Nur mehr der Nadelsitz und die Nadel des Ventils kommen mit dem nichtschmierenden Medium in Berührung. Die Ausführung dieser Teile aus Sintermetall Ist möglich und diese sind als Verschleißteil leicht auswechselbar. Der hydro-elektrische Regelteil Im Injektor ist davon, wegen des getrennten Kreislaufes nicht betroffen.

### Weitere Alternativen der Injektorausführung sind:

Pumpe Düse Ausführung mit einer Kombination von Hochdruckkolben und
Kugelventilen.
Mittels Elektromagnetischem Schwinger wird der Pumpenkolben in Schwingung versetzt. Durch den einstellbaren Anschlag und die Positionierung der Einlaßdüse wird die Auch die Verwendung der bewährten Airless Zerstäuber kann für einfache Anwendungen eingesetzt werden. Vorteilhaft ist, daß durch die Pumpwirkung nur eine geringe Druckdifferenz zwischen injiziertem Material und der Schmelze entsteht. Somit ist diese Einrichtung besonders für Dotierungen der Schmelze geeignet.
Die Regelung und Steuerung der Einbringung weist folgende Merkmale auf:
Wahlweise wird der hydraulische Steuerkreislauf von der zu injizierenden gasbildenden Substanz getrennt ausgeführt. Der Druck p₁ der injektionssubstanz und des hydraulischen Steuerkreislaufes p₂ werden mittels dynamischem Druckregelventil gesteuert.
Das Steuergerät regelt in Abhängigkeit vom Schmeizedruck p₃, den hydraulischen Steuerkreislauf und den Injektionsdruck. Der Injektor wird mittels Selenoid oder Piezoelement betätigt. Diese Regelung erfolgt mittels "Arbitrary Wave Form Generator".
Weiters werden Ausführung von Hydraulik, Düsen, Injektoren und Schmeizkanal beschrieben,

### Die Hydraulik wird für:

Strangfertigung, also stetigem Betrieb wie zum Beispiel Extrusion, Strangguß und für Stückfertigung mittels Spritzgießen und Druckguß beschrieben.
Die Anlage für Strangfertigung findet bei Extrudern Anwendung. Stetige Förderung und mehrfache Düsenanordnung ist gefordert.
Die Anlage für Stückgut findet bei Spritzgießmaschinen und Druckgußanlagen Anwendung. Durch die geringe Einsatzzeit der Injektionsanlage, die nur beim Spritzen zur Anwendung kommt, wird eine vereinfachte Lösung mittels Druckzylinder und
Doppelkolben vorgschlagen. Die Hydraulikanlage der bestehenden Maschine erzeugt ca. 26 MPa, die verwendet werden, um den Hochdruck mittels Druckumsetzem zu erreichen. Während der Plastifizierung werden die Druckumsetzer wieder mit gasbildender Substanz einerseits und Hydraulik Steuerungsöl anderseits geladen.
Für die Dotierung der Schmelze mit konkret vorbestimmter Größe und Lage der Tropfen Ist es notwendig, um genaue Druckdifferenz während des Einspritzvorgang zu gewährleisten. Zu hohe Druckdifferenz führt zur Zerstörung der Schmelze. Die Druckverläufe sind in FIG.: 9 dargestellt. Der Spritzdruck schwillt über den Einspritzvorgang bis zum Nenndruck an.
Während dieses Einspritzens muß der Gasbildner mit gering höherem Druck in die Schmelze gebracht werden. Die Geschwindigkeit der Schmelze im Angußkanal muß mit der Austrittsgeschwindigkeit des Gasbildners übereinstimmen.
Hiezu bedarf es einer genauen Druckregelung mittels elektrischen Druckbegrenzem und einer präzisen Betätigung der hydro-elektrischen Ventile. Die hydro-dynamische Ausbildung von Ventilsitz, Ventileinsatz und die strakende Ausbildung des Düsenkanales sind Voraussetzung für eine einwandfreie Dotierung.
Die Injektoren der "common rail technology" sind In der Lage diese Anforderungen zu erfüllen.
Die Ansteuerung der Selenoide erfolgt mittels "Arbitrary Wave Form Generator", sodaß die Öffnung und Schließung optimiert werden kann.

Im Weiteren wird die Gestaltung von Düse und Schmelzkanal beschrieben.

### Verfahren zum Einbringen von Zuschlagstoffen

genaue Dosierung und homogene Verteilung.

Das vorliegende Verfahren hat sich zur Aufgabe gestellt, in einem vom Schmelzestrom abgezweigten Schmelzekanal das Material durch Zuführen von Zuschlagstoffen, Dosieren, Vermischen und Vorteilen eine Compoundierung, also Veränderung des Materiales, vorzunehmen.
Diese Zuschlagstoffe bestimmen wesentlich die Eigenschaften des Kunststoffes im Schmelzestrang.
Diese Zuschlagstoffe sind beispielsweise Zusatzkomponente wie Härter, Farbstoffe, Gasbildner, Weichmacher, Füllstoffe, Faserverstärkungen.
Dieses Verfahren kann ebenso im inneren von Extrusionswerkzeugen und Formen von Spritzgießmaschinen angewendet werden, wobei mindestens zwei Stränge von unterschiedlichem Kunststoffmaterialen verarbeitet werden.

Mit diesem Verfahren hergestellte Profile weisen somit an vorbestimmten Querschnitten unterschiedliche Materialeigenschaften aus.
Dieses Verfahren spart somit einen Extruder zur Herstellung einer weiteren Materialkomponente.
Der wesentliche Vorteil liegt darin, daß ausgehend vom gleichen Grundmaterial eine spätere Entsorgung erleichtert wird, da von ein und demselben Grundmaterial ausgegangen wird und die Zuschlagstoffe sich beim anschließenden Recyklieren verteilen oder ausgeschieden werden,

Die Zuschlagstoffe werden mittels Düse, injektor, Zuführungsrohr, Mischkopf, porösem Sintermaterial, Pumpschieber, Chargiereinrichtung oder Sprüheinrichtung eingebracht.

Folgende konkrete Anwendungen für die Herstellung von Profilen seien hier beispielsweise aufgezeigt:

### PVC Fensterprofile.

Die Bereiche der Profile, die der Fenster Außen- bzw. innenseite nahe liegen werden nach dem vorliegenden Verfahren wärme- und schalldämmend ausgeschäumt.
Die Dome, die das bisher bekannte Mehrfach-Kammern-System mit Hohlräumen ausstatten, werden mit vorliegend beschriebene Vorrichtung ausgestattet. Vom Schmelzesstrom wird innerhalb des Domes ein Schmeizekanal geführt, der mittels Mengensteuerung (Ventil, Drossel) die Schmelze an der Vorrichtung zur Zuführung der Zuschlagsstoffe vorbeiführt. Nachgeschaltet werden Einrichtung zur Vermischung und Homogenisierung Im Kanal die Compoundierung durchführen. Im Falle des PVC Fensterprofiles ist dieser Zuschlagstoff physikalisches Schäummittel wie Wasser, Kohlendioxyd, Alkohol, Glyzerin usw,

Der Druckverlauf im Schmelzekanal ist abnehmend, sodaß die Zuschlagstoffe gasen und die Volumsvergrößerung entweder durch Geschwindigkeitssteigerung bzw, durch Volumenszuwachs in der Expansionszone (trichterförmige Aufweitung) das compoundierte Material zu den außenliegenden PVC Profilwänden heranführen und dort homogen miteinander adhesiv verbunden werden.
Der Vorteil dieser Profile mit Mehrfach-Komponenten liegt In der günstigen und einfachen Herstellung, in der Wärmedämmung (Niederdruck in den Schaumzellen und somit geringe Molekularbewegung und geringe Wärmeübertragung) und einfache Entsorgungskosten.
Als Variante werden die Zuschlagstoffe als einzelne Dotierung eingebracht und bilden Im Profil honeycombartige Zellstrukturen von hoher Festigkeit. Diese Strukturen ersetzen etwaige notwenige Verstärkungsprofile.

**Fensterprofile aus Polyolefinen:** wie oben, jedoch aus Polypropylen PP oder Polyethylen PE, HDPE usw.

### Claddings oder bretterähnliche Außenverkleldung für Häuser oder Innenwände.

Einfacher als oben beschrieben wird das gesamte extrudierte Profil zur Gänze mit Schaum oder großen Zellstrukturen versehen, wobei das Material vom Hauptstrom abgezweigt wird und compoundiert wird.
Der nachfolgende Prozess der Kalibrierung und Kühlung bleibt wie beim bisherigen Verfahren.
Dieselben Profile werden auch bei Innenausstattung und mobilen Zwischenwänden zum Einsatz kommen und zeichnen sich bei Herstellung von groben Zellstrukturen durch hohe Festigkeit aus.

### Rohre aus PVC, PO

Durch geeignete Einbringung der geschäumten oder mit Füllstoffen-, Faserverstärkung versehenen Schmelzestrom In die vorgesehene Bereiche des Profiles, wie zum Beispiel Zwischenschicht, Randschicht usw., wird ein mehrkomponentiges Rohr mit einfachen Maßnahmen herstellbar. Die Vorrichtung zum Compoundieren wird zwischen die Flansche von Extruder und Werkzeug eingebaut und versorgt die Kanäle des Werkzeuges mit dem veränderten Schmelzestrom.
Eine ander Herstellmöglichkeit und guten Vermischung von Schmelze und Zuschlagstoffen besteht in der Zuführung der Zuschlagstoffe vor der Zellenradpumpe. Die zusätzlich eingebauten Mischer und Mischköpfe sorgen für eine homogene Compoundierung.

### Farbgebung an den Randschichten der Profile.

Die Einbringung von Farbstoffen In den getrennten Schmelzekanal ermöglicht unterschiedliche rasch wechselbare Fargebung. Wirtschaftlich sind die hochwertigen Farbstoffe hochpreisig und somit muß bei Farbwechsel nicht mehr der Extruder ausgefahren werden.
Die Umstellung der Farbe wird unmittelbar und ohne Verluste wirksam.

Die Heranbringung einer gezielten Randschicht, die mit Farbstoffen versehen ist führt zu einer weiteren Möglichkeit der Kostenreduzierung.

### Herstellung von Platten, isolierplatten und Verbundplatten

Bei Anlagen von großer Arbeitsbreite wird entweder die Zuschlagkomponente gleich in die Mitte der extrudierten Platte zugegeben, oder der Schmekzekanal abgezweigt und ähnlich wie bei der Vorrichtung, die den Einbau in einem Dom ermöglicht, beschrieben wurde, Jedoch für die erforderlichen großen Arbeitsbreiten gestaltet sind.

### Vorrichtung zur Nachrüstung von Extrusionsanlagen für Mehr-Komponenten-Betrieb:

Die Vorrichtung wird zwischen die Flansche von Extruder und Werkzeuganschluß montiert und enthält folgende Bauelemente.
Mindestens ein Einlauftrichter mit Teilung des Schmelzekanals.
Druck und Mengenregler des Schmelzestromes.
Vorrichtung zum Einbringen der Zuschlagstoffe bestehend aus Injektor
Mischstation bestehend aus Mischzone beispielsweise Stifte, Blenden, Wendelzonen.

Expansionszonen mit veränderlichen Querschnitten insbesonders für Schaum-Komponenten bzw. Hohlzellen Schmelzestrom.

### Vorrichtung zum Dotieren und Mischen von Substanzen In flüssiges Medium mittels Sitz- oder Sacklochdüse, insbesondere in Heißkanaldüse.

Die Erfindung betrifft einen multifunktionalen Misch- und Dosierkopf bestehend aus einem Düsenkegel und einer Düsennadel die durch die Nadelstellung die Menge und Fließgeschwindigkeit des außen fließende Medium dosiert oder abriegelt, und diese Düsennadel wiederum als Düsenkegel mit einer Düsennadel ausgebildet ist, die die Menge und Fließgeschwindigkeit des innen fließende Mediums dosiert oder abriegelt.

Diese Kombination aus Ventil, Düse und Injektion in diese Strömungsführung des äußeren Mediums ausgebildet als konzentrischer Doppelkegel ermöglicht eine energiesparendes Mischen.
Die Erfindung betrifft auch eine Heißkanaldüse, deren Verschlußnadel aus einem Injektor zur Einbringung und Dotierung von Substanzen in die außen fließende Schmelze besteht.
Ebenso worden zahlreiche Kombinationen dieses Misch- und Dosierkopfes erwähnt, insbesonders der Einbau in Plastifiziereinheiten Extruder Schmelzekanal und dem Nachschlten eines statischen Mischers.

Der wirtschaftliche Nutzen besteht in der örtlich vorbestimmten genauem Dotierung der guten Durchmischung im Mischkopf und der genauen Dosierung des Mischverhältnisses.
Angewendet als Heißkanaldüse mit integrierten Mischkopf wird die Kunststoffschmelze mit Substanzen wie Farbstoffen, Härter, Weichmachern, Gasbildnern usw. direkt unmittelbar vor der Einspritzung In das Werkzeug versehen.
Neben den zahlreich bekannten 2 Komponenten Heißkanaldüsen zeichnet sich die vorgeschlagene Lösung durch folgende Merkmale aus:
Der Einsatz einer konzentrisch liegenden Verschlußnadel in der Verschlußdüse.
In EP 0310 914 aus 1987 Verfahren zum Spritzgießen (BATTENFELD) ist eine konzentrisch liegende Verschlußnadel In FIG.: 6.1 bis 6.5 aufgezeigt worden.
Die vorliegende Vorrichtung grenzt sich davon dadurch ab, daß im Gegensatz zu EP 0310914 wo jeweils nur ein Medium geschaltet wird, eine vorbestimmte gezielte Dotierung, genaue Dosierung und/oder gute Durchmischung mittels Einspritzen In den Flüssigkeitsstrom und wahlweise Pulsation angestrebt wird.
In US 4657496 aus 1987 von HUSKY wird ein Heißkanaldüse für 2 Komponenten mit konzentrisch liegenden Zuführungsrohr veröffentlicht. Durch eine Ausnehmung (9) und (6) in der Düsennadel wird je nach Stellung entweder die eine oder die andere oder beide Komponente freigegeben. Die konzentrische Ausbildung der inneren Düse In der äußeren Düse ermöglicht die Dosierung durch die gesteuerte Spaltweite jeweils selbstständig sowohl der inneren, wie der äußeren Düse.
Eine Durchmischung bzw. ein rasch pulsierendes Einbringen, wie dies die vorliegende Vorrichtung zeigt, ist jedoch nicht Gegenstand dieser US4657496 Patentes.

Die vorliegende Erfindung zielt darauf ab, neben der konzentrischen Einbringung mindestens zweier Medien, diese auch zu Mischen bzw. das äußere Medium mit dem inneren Medium zu dotieren bzw. zu impfen.

In US 5288164 ist eine Variante der konzentrischen Düsen dargestellt, die sich in der Betätigung der hohl ausgebildeten Düsennadel von US4657496 unterscheidet. Auch hier ist eine konzentrische Einbringung, jedoch keine Durchmischung bzw. Dotierung vorgesehen.
Die Verschlußnadel wird mittels in einer Bohrung liegenden Bolzen, der von einem Servomechanlk gesteuert wird, betätigt.
Für eine vorbestimmte gezielte Dotierung und/oder genaue Dosierung und gute Durchmischung ist die Verwendung einer Sitzlochdüse (VCO valve cone orifice) und eines CDI Injektors, wie diese in der Verbrennungskraft Technik eingesetzt werden, vorteilhaft.
Für eine vorbestimmte gezielte Dotierung und/oder genaue Dosierung und gute Eindringtiefe ist die Verwendung einer Sacklochdüse und eines CDI injektors, wie diese In der Verbrennungskraft Technik eingesetzt werden, vorteilhaft,

Die Betätigung erfolgt neben der bekannten Hydraulikkolben auch mittels Servomechanik beispielsweise Solenoid, Piezo-gesteuerter Hydraulik Servos.

### Beschreibung der Abbildungen:

Verzeichnis der Bezugszeichen.
- 1.: Düsennadel pulsierend bewegt
- 2.: Düsenkörper
- 3.: Nadelsitz
- 4.: Flache Bohrung Im Düsenkörper
- 6.: Freiraum in der Sitzlochdüse
- 6.: Fächerförmig angeordnete Bohrungen
- 7.: Achslale Bohrung im Düsenkörper
- 8.: Freiraum der Sacklochdüse
- 9.: Hochdruckpumpe
- 10.: Rohr des fließenden Mediums
- 11.: Injektor
- 12.: Hochdruckleitung
- 13.: Leckölleitung
- 14.: Behälter des Additivs
- 15.: Common rail (Sammelleitung)
- 16.: Zahnradpumpe
- 17.: Fließendes Medium
- 18.: Einspritzstrahl
- 19.: Plastifizierzylinder
- 20.: Plastifizierkammer bei Spritzgießmaschinen
- 21.: Düse des Plastifizierzylinders
- 22.: Werkzeug
- 23.: Heißkanalsystem
- 24.: Sperre
- 25.: Airless Pistole
- 26.: Verdichter
- 27.: Luftzuleitung
- 28.: Brennkammer
- 29.: Flammzone
- 30.: Dom mit Expansionskanal
- 31.: Stege für Profile
- 32.: Dom für Hohlkammern
- 33.: Geschäumte Hohlkammer
- 34.: Hohlkammer
- 35.: Profil
- 36.: Kaskadenförmige Einspritzung
- 37.: Fächerförmige Einspritzung
- 38.: Kern des Werkzeuges
- 39.: Mitgerissene /zugemischte Luft
- 40.: Schnecke der Plastifizeireinheit
- 41.: Expansionszone im Nebenkanal vorzugsweise im Dom des Werkzeuges angebracht.

- 51: Werkzeug zur Herstellung von extrudierten Profilen
- 52: Schmelzefluß, Anschluß zum Extruder
- 53: Dom mit Schmelzekanal, Einbauteil Im Werkzeug zur Leitung des Schmelzeflusses, im vorliegenden Falle mit integriertem Schmelzekanal.
- 54: Injektor, Düse zum Einspritzen von Zuschlagstoffen, Im abgezweigten Kanal
- 55: Eingespritzte Zuschlagstoffe
- 55a: Einspritzen im Gleichstrom
- 55b: Einspritzen im Gegenstrom
- 56: Austrittsquerschnitt des abgezweigten Schmelzekanales
- 57: Dom zur Herstellung eines Hohlraumes und zugehöriger Hohlraum Im Profil
- 58: Schmelzekanal mit unverändertem Extrudat und korrespondierendem Profil
- 59: Hochdruckpumpe für Zuschlagstoffe
- 60: Expantionszone für gasbildende Zuschlagstoffe
- 61: Quarschnittseränderung regulierbar Im Austritt, Schikane für Durchmischung
- 62: Quersrchnittsveränderung im Eintrittskanal, regulierbar
- 63: Drucksensor Im abgezweigten Schmelzestrom zur Nutzung als Regelparameter
- 64: Dom mit Schmelzekanal und Eintrittsöffnung
- 85: Ringförmige Eintrittsöffnung für mehrschichtige Profile
- 66: Mittige Eintrittsöffnung für die inneren Profilschicht
- 67: Durchtrittskanal durch einen anderen Schmelzekanal
- 68: Flansch des Werkzeuges
- 69: Flansch des Extruders
- 70: Zwischenstück als Nachrüstung
- 71: Schmeizkanalverlängerung
- 72: Durchtritte zum Schmelzekanal

- 81.: Schmelze-Verschlußnadel außen
- 82.: Substanz-Verschlußnadel innen
- 83.: Doppelkegelsitz
- 84.: Bohrung und Bolzen zur Betätigung der Substanz-Verschlußnadel
- 85.: Zuführung der Substanz In der Bohrung
- 86.: Detail des Misch- und Dosierkopfes
- 87.: Sitzlochdüsen-, Sacklochdüseneinsatz
- 88.: CDI Injektor
- 89.: Zuführungskanal der Schmelze
- 90.: Betätigungskolben hydraulisch
- 91.: Zuführung der Substanz
- 92.: Dotierung, Schmelze mit der Substanz
- 93.: Servomechanik beispielsweise Selenoid/hydraulik, Plezo/hydraulik
- 94.: Hotrunner Düsensitz
- 95.: Spritzgießen Düsensitz
- 96.: Spritzgießen Plastifizierdüse
- 97.: Extrusion Düsensitz
- 98.: Zuleitvorrichtung
- 99.: Extrusion Schmelzekanal
- 100.: Statischer Mischer

- 101: Fördereinrichtung gasb. Substanz
- 102: Druckregelventil gasb. Substanz p₁
- 103: Kreislauf gasbildender Substanz
- 104: Hydraulik Regelkreislauf
- 105: Fördereinrichtung Hydraulik Kreis
- 106: Druckregelung Hydraulik Kreis p₂
- 107: Tank Hydraulik
- 108: Ventilkugel
- 109: Selenoid oder Piezoeiheit
- 110: Hydraulische Betätigung des Ventils
- 111: Sperrdruck, Dichtung
- 112: Ventil des Injektors
- 113: Düse des Injektors
- 114: Schmelzestrom
- 115: Drucksensor im Schmelzestrom
- 116: Zwischenstück Angußkanal
- 117: Einbringung gb. S, in die Schmelze
- 118: Heizung des Zwischenstückes
- 119: Druckmeßgeber für p₃ (Schmelze)
- 120: Arbitrary Wave Form Generator
- 121: Druckmeßeinrichtung
- 122: Steuereinrichtung
- 123: Verbindung SGM, Extruder, Strangp.
- 124: Pumpe-Düse Kombination
- 125: Leckölleitung Steuerhydraulik
- 126: Zuleitung Steuerungshydraulik
- 127: Zuganker für Magnotbetätlgung
- 128: Injektor
- 129: Drosselventil
- 130: Ventilstössel
- 131: Feder für Schließkraft
- 132: Zuleitung für die gasb. Substanz
- 133: Zusätzlicher Kanal für 2. Medium
- 134: Endanschlag für Hubbegrenzung
- 135: Pumpenstößel
- 136: Ventilsitz Zuleitung
- 137: Kugelventil Zuleitung
- 138: Rückhohlfeder
- 139: Sperrventil gegenüber Schmelze
- 140: Lecköl Leitung
- 141: Einbördelung des Ventilkugelsitzes
- 142: Hydraulik der Grundmaschine
- 143: Doppelkolben für gasb. Substanz
- 144: Doppelkolben für Steuerhyrdraulik
- 145: Druck Achse in Mp
- 146: P1 Druck gasbildende Substanz
- 147: P2 Druck Steuerhydraulik
- 148: P3 Druck der Schmelze
- 149: P5 Druck am Steuerkolben
- 150: Zeitachse
- 151: Spannung am Selenoid
- 152: Bezugsachse
- 153: Trapezförmige Wellenform
- 154: Dreleckige Wellenform
- 155: Halb Sinusschwingung
- 156: Glockenförmige Wellen Form
- 157: Periodisierte Wellenform
- 158: Unsymmetrische Glockenform
- 159: Injektor Heizung
- 160: Spritzdüse
- 161: Dotierung im Gleichstrom
- 162: Anschluß am Werkzeug
- 163: Zerstäubung im Gleich-, Gegenstrom
- 164: Vergrößerung der Strangeinbringung
- 165: Düsenkörper
- 166: Schlitzdüse
- 167: Sternlochdüse
- 168: Sacklochdüse
- 169: Vergrößerung der Lavaldüse
- 170: Düsenkegel geöffnet gezeichnet
- 171: Düsenkanal
- 172: Sitzlochdüse mit axialer Düse
- 173: Kegeldüse mit axialer Düse

### Beschreibung der Figuren:

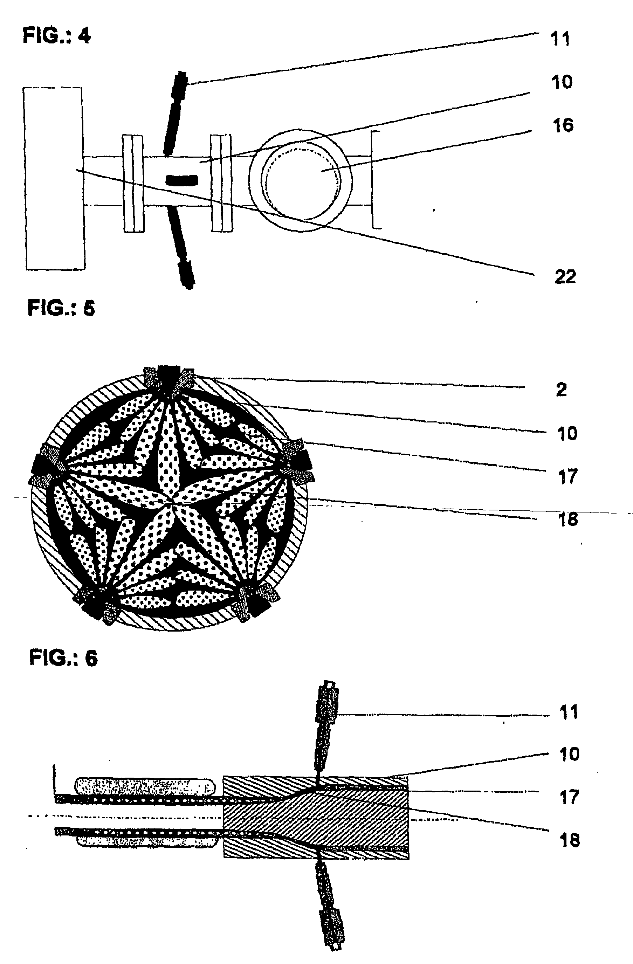

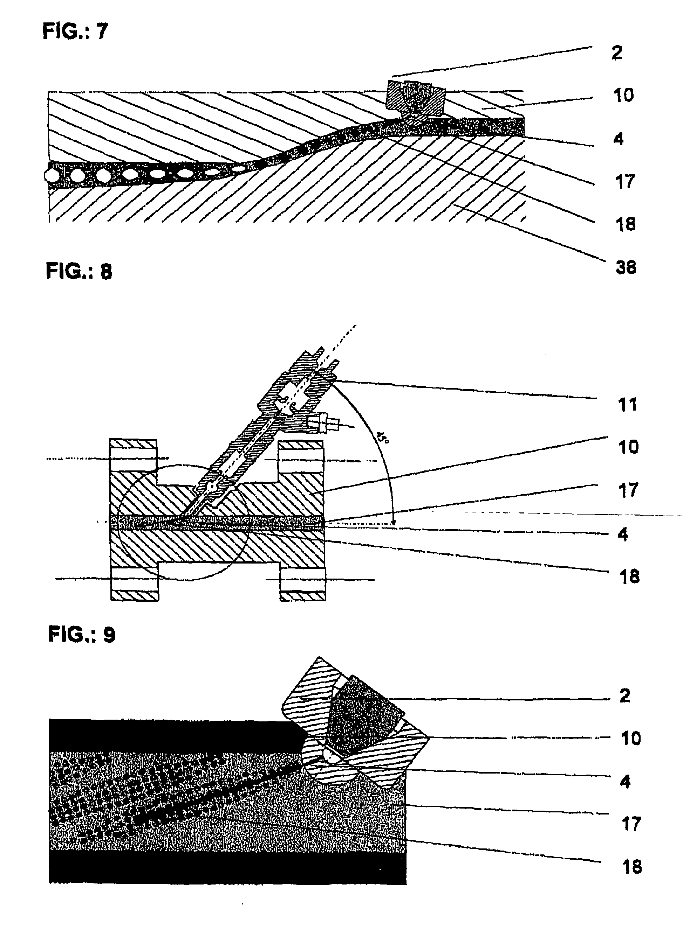

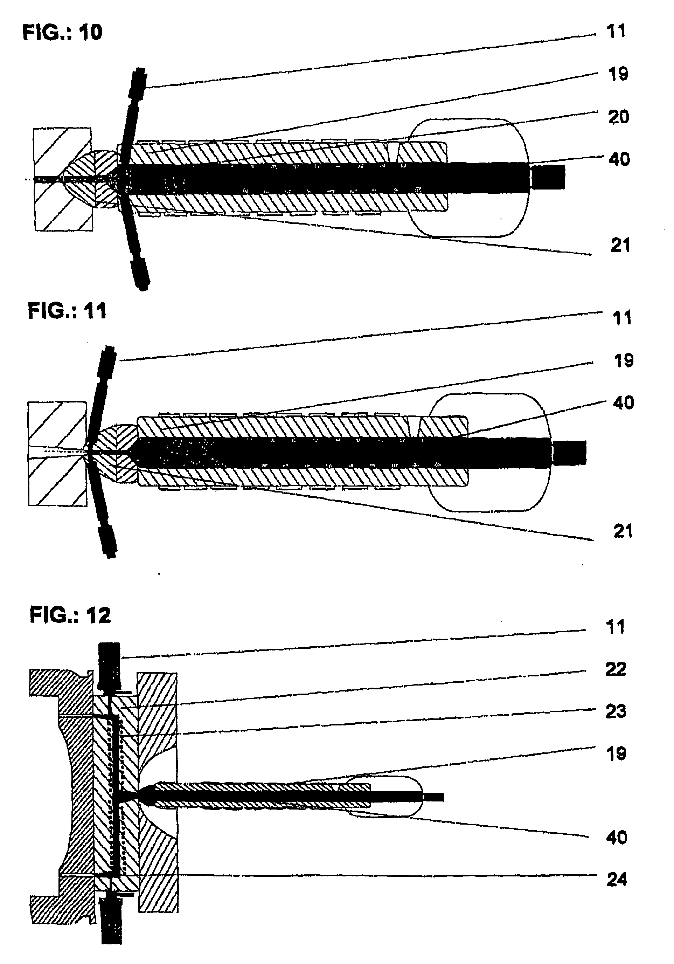

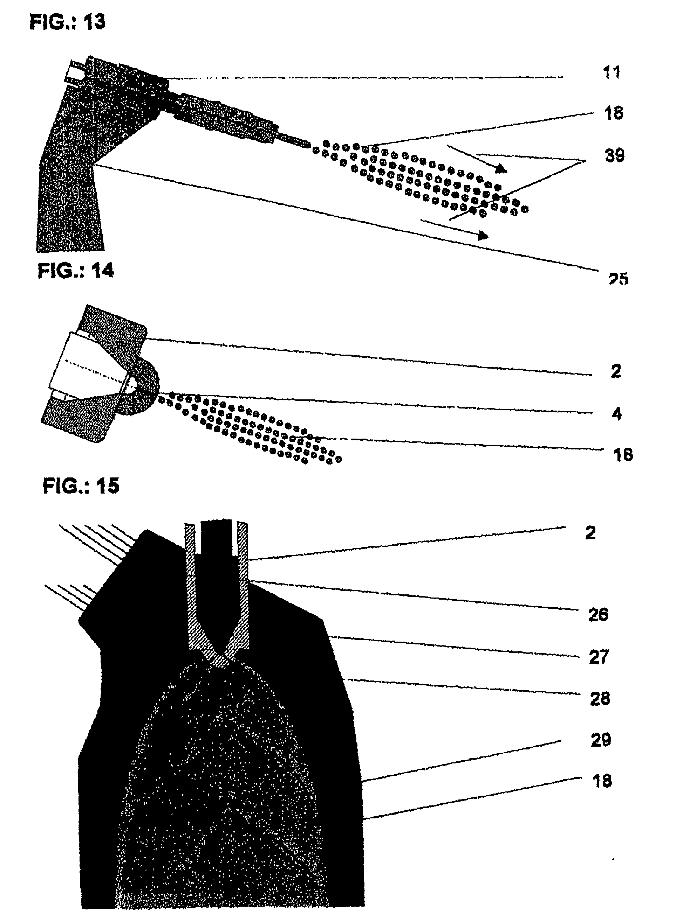

In Figur 1 und 2 sind Düsen mit Düsennadel und Nadelsitz dargestellt. In den nachfolgenden Figuren 3 bis 17 sind Beispiele für die Anwendung des Verfahrens zur genauen Dosierung und möglichst homogenen Verteilungen dargestellt.

In Figur 1 ist eine Sitzlochdüse dargestellt. Mit (1) ist die Düsennadel, die den Nadelsitz (3) im Düsenkörper (2) abschließt. Der geringe Freiraum (5) mit geringem Volumen kennzeichnet die Sitzlochdüse, deren Bohrung (4) mit ca 80° aus der Achse im allgemeinen bei Verbrennungskraftmotoren Verwendung findet. Die Bohrungen (6) deren Achsen auf der rechten Seite dargestellt sind, ergeben die Bohrungen mit Neigungen von 0 bis 75° aus der Achse der Düse.

In Figur 2 Ist eine Sacklochdüse dargestellt. Der große Freiraum (8) der Düse neigt zum Nachtropfen, bietet aber großen Spielraum zur Gestaltung der fächerförmigen Bohrungen (6) bis zur achsialen Bohrung (7).

In Figur 3 ist die Anordnung einer Dosier und Mischeinrichtung für fließendes Medium Im Rohr (10) gezeichnet. 5 Injektoren (11) ragen in das Rohr. Die Injektoren sind an ein Hochdruckleitung (12) der Zusatzstoffe angeschlossen. Mit (14) der Tank, (9) die Hochdruckpumpe über (15) die Zuleitung (common rail) und (13) die Leckölleitung.

In Figur 4 ist die Anordnung der Figur 3 in der Draufsicht für eine Extrusionsaniage gezeigt. Die Dosier und Mischeinrichtung liegt in der Flußrichtung zwischen Zahnradpumpe (16) in der Zuleitung, die zugleich Mischrohr (10) der Vorrichtung ist, zum Werkzeug (22).

Figur 5 stellt den Rohrquerschnitt (10) in der Vergrößerung dar. Die 5 Düsenkörper (2) sind um 72° gedreht angeordnet. Jeder Düsenkörper hat 7 Bohrungen Im Winkel 75°, 50°, 25° und 0° zur Achse. Die Einspritz-Strahlen (18) geben eine gleichmäßige Abdeckung des Querschnittes des Mediums (17). Die Länge des Spritzstrahles wird durch den Bohrungsdurchmesser bestimmt, der zwischen 0,11mm und 0,14mm liegt.

In der Figur 6 ist ein Extruder Werkzeug für ein zylindrisches Profil dargestellt. Zwei der vielfach angeordneten Injektoren (11) sind im Schnitt gezeichnet. Die Zusatzstoffe (18) werden entsprechend der Fließgeschwindigkleit des Mediums (17) in Fließrichtung eingestrahlt.

In Figur 7 ist das Detail der Düsenanordnung dargestellt. Die Düsenkörper (2) haben mindestens eine Bohrung (4) in der Kanal und FlieBrichtung, Der Einspritzsrahl ist derart gerichtet, daß die Zusatzstoffe nicht an die Wand (10) und den Kern (38) gelangen.

In Figur 8 ist der Anwendungsfall für einen einzelnen Injektor dargestellt, der mit ca. 45° zur Rohrachse (10) geneigt ist. Die Einspritzbohrung (4) ist im flachen Winkel zum Medium Fluß geneigt, also ca. 40° aus der Injektorachse angeordnet.
Die pulsende Einspritzung ergibt die in Figur 9 dargestellte kaskadenförmige Verteilung.

Figur 10 stellt Anwendungsfälle bei Spritzgießmaschinen dar. Ähnlich wie in Figur 8 und 9, hier aber mit mindestens zwei Injektoren (11) dargestellt wird der Zusatzstoff in Fließrichtung leicht geneigt in Richtung der Düse (21) eingespritzt. In Figur 10 ist dies nach der Schnecke (40) innerhalb des Plastifizierzylinders (19) also noch in den Plastifizierraum (20). Dies ist für weitere gute Durchmischung wie zum Beispiel zum Einmischen von Farbstoffen, vorteilhaft. Diese Anordnung ist auch zwischen zwei Schneckenabschnitten Innerhalb einer Plastifiziereinheit denkbar.
Für genaue Dostierung ohne Durchmischung ist die Anordnung in Figur 11.
Hier wird in der Austrittsöffnung der Düse (21) eingespritzt. Dies ist für Anwendungen wie Mischen mit Härtern und Weichmachern, geeignet.

In Figur 12 erfolgt die Einspritzung durch den Injektor (11) erst unmittelbar vor Eintritt ins Werkzeug (22). Vorteilhaft wird dies in einem Heißkanalsystem (23) angewendet. Die tatsächlich ins Werkzeug gelangende Mischung wird nicht vom Material im Plastifizierzylinder (19) bestimmt, sondern erst nach Einbringung der Zuschlagstoffe flexibel und variabel bestimmt.

Figur 13 stellt den Anwendungsfall einer Airless Spritzpistole (25) dar. Das fließende Medium (39) ist in diesem Falle die umströmende Luft. Der Zusatzstoff ist der Lack (18).
Die Pulsierung wird entsprechen der Lackierungsbedingungen eingestellt.
Die Düsenanordnung der Airless Anlage Ist in Figur 14 dargestellt. Mindestens eine Bohrung (4) im Düsenkörper (2) nahe der Achsrichtung liegend ergibt das Bild des Einspritzsträhles (18).

In Figur 15 ist die Dosier und Mischvorrichtung an Hand einer Brenneranlage dargestellt. Die Düse (2) ragt in den Brennraum (27), dessen Mantel (28) die Mischkammer begrenzt. Die Verbrennungsluft wird mittels Verdichter (26) komprimiert und die Zuerstäubung erfolgt mittels der auf einem Kegel liegenden Einspritzbohrungen.
Der Einspritzstrahl (18) des Brennstoffes ergibt die genau dosiertes und gemischtes Verbrennungsgemisch (29).

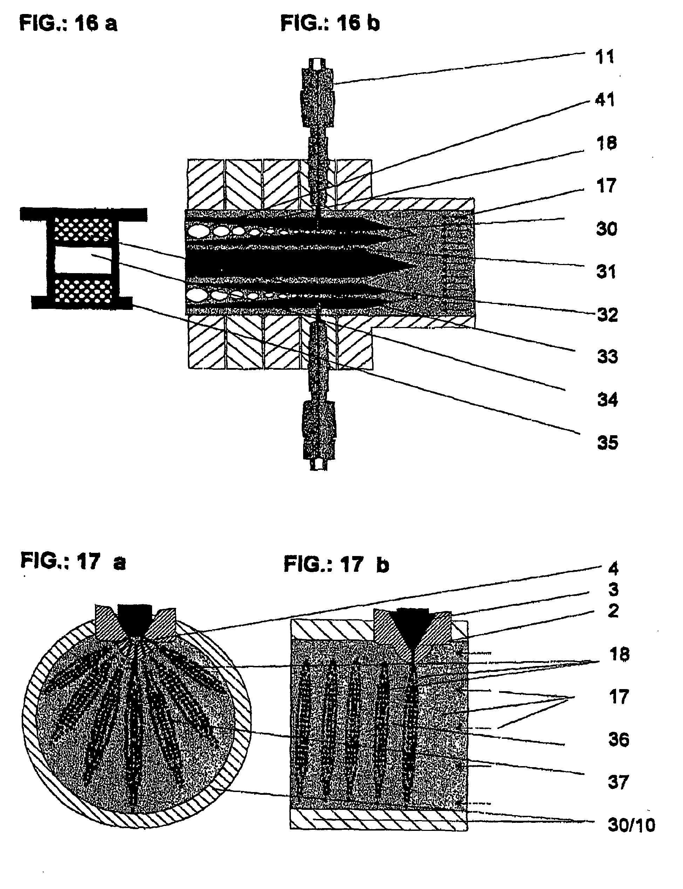

In Figur 16 a und b ist der Anwendungsfall eines Werkzeuges für einen Extruder zur Herstellung von Profilen, wie beispielsweise von Fensterprofilen gezeigt.
Die Dosier und Mischvorrichtung hat hier den Zweck Material aus dem Extrudierten Hauptstrang mit Gasbildnern zu dotieren. Der Querschnitt der Form ist in Figur 16b dargestellt, Die injektoren (11) ragen in den Nebenschmelzestrom (30). Die profilbildenden Ströme (31) werden durch Einlaufkanäle der Dome (32) getrennt, Der Schmelzestrom (17) wird dotiert (18) und bildet im Nebenstrang Schaum der in die Kammern (33) und (35) gelangt. Kammern mit vollem Dom werden wie bisher als Hohlräume (34) ausgebildet.

In Figur 17 a und b ist die Darstellung der pulsierenden Einspritzung (18) des Nebenkanals (30) gezeigt. Diese Darstellung ist auch für andere Anwendungen als für die Extrusion in Figur 16 wie zum Beispiel für Pelletieranlagen, Stranggußanlagen mit eigenem Mischrohr (10) geeignet.
Die Figur 17 a zeigt den Rohrquerschnitt (30) oder auch als Einzelrohr (10).
Die Figur 17 b zeigt den Längsschnitt durch das Rohr(30/10).
Der Düsenkörper (2) hat 7 fächerförmig angeordnete Bohrungen (4) die in den Materialfluß (17) mit dem Einspritzstrahl (18) Dosieren und Mischen.

In der Abfolge ergeben sich die in Fließrichtung gespritzen vorhergehenden Einspritzstrahlen (36) respektive (37).

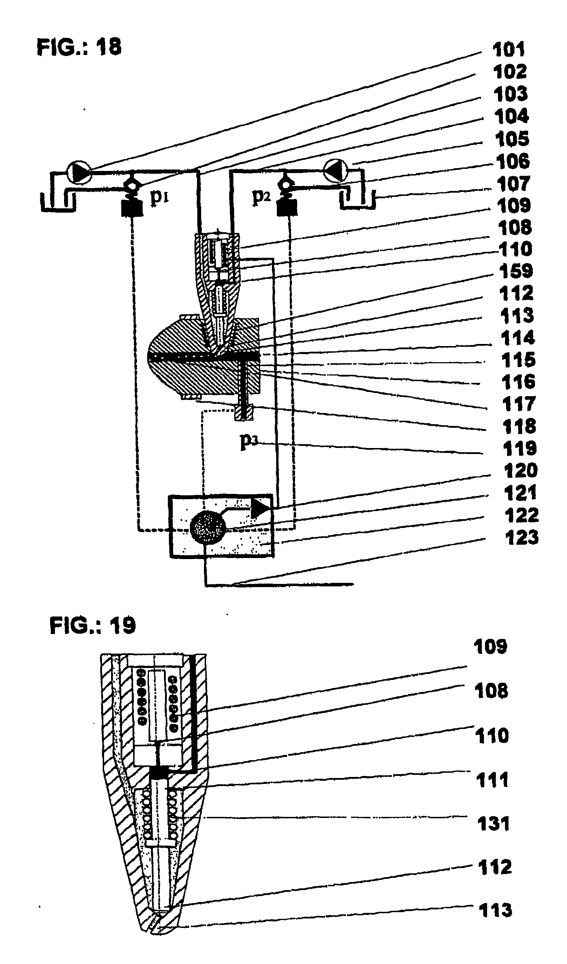

In Figur 18 ist die gesamte Vorrichtung für einen Injektor einfacher Bauart (1973) dargestellt. Durch die Anwendung von Pumpen (101) und (105) ist dieses Hydraulikschema für Stetigbetrieb geeignet. Das Einspritzmedium (103) ist vom Steuermedium (104) getrennt ausgeführt. Der Druck der Kreisläufe wird mittels elektrisch betätigtem Druckreduzierventil (102, 106) eingestellt, Das Ventil (112) wird mittels elektro-hydraulischer Betätigung bewegt. Diese besteht aus dem Solenoid (109) dem Kugelventil (108) und dem Hochdruckzylinder für die hydraulische Betätigung (110). Die Steuerung (122) des elektro-hydraulischen Betätigung erfolgt mittels Informationsverarbeitung (120) über Einspritzzyklus/Extrusionsdaten (123), den Drucksensoren der Schmelze (115), des Einspritzmediums (102) des Steuermediums (106). Mittels frei gestaltbarem Wellenform Generator (120) wird das Öffnen und Schließen des Ventils (112) optimiert. Die Einbringung der Gasbildenden Substanz (117) in den Schmelzestrom (114) erfolgt im Zwischenstück (116) zwischen Extruder/Spritze (160), über die in den (114) ragende Düse (113). Zur temperierten Einführung der gasbildenden Substanz ist eine Heizung (159) im Bereich der Düse (113) angebracht.

Figur 19 stellt einen Injektor entsprechend dem Stand der Technik aus 1973 dar, Diese besteht aus einer Sacklochdüse (113) um den Düseninhalt im Brennraum klein zu halten. Der Ventilsitz (112) verschließt die Düse vom ständig Druckführenden Bereich. Die Anpreßfeder (131) ergänzt die Kraftdifferenz aus Düsennadel (112) und hydraulischer Anpressung (110). Die Öffnung erfolgt durch betätigen des Selenoids (109), der die Ventilkugel (108) frei gibt und das Steuermedium aus dem Hochdruckraum (110) strömen laßt.

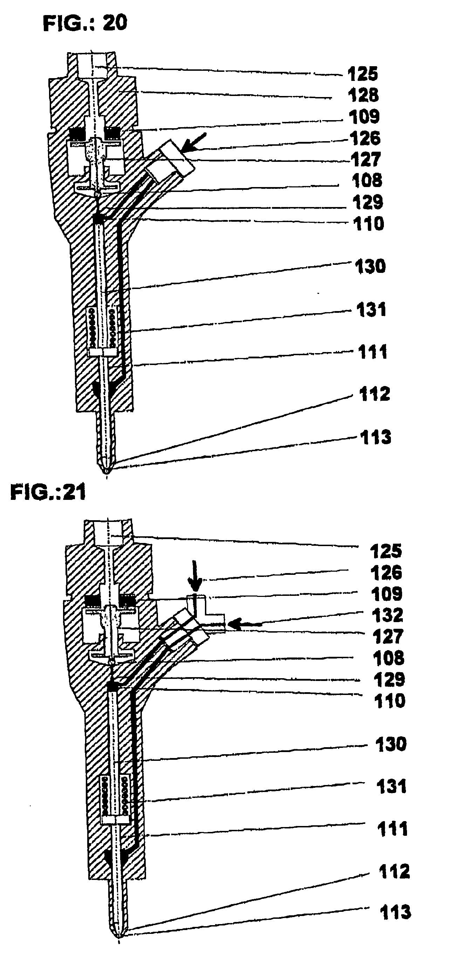

Figur 20 stellt die Injektoren entsprechend dem Stand der Technik dar. Im Wesentlichen die Merkmale die bereits 1973 erkennbar sind, wobei die Ausführung der elektro-hydraulischen Betätigung mittels Drosseln (129) Zuganker (127) und Doppelkammer erweitert wurde. Handelsübliche Injektoren weisen bei der Zuführung (126) zwei Bohrungen für die Zuleitung zum Steuerkreislauf und zur Injektionsdüse auf.

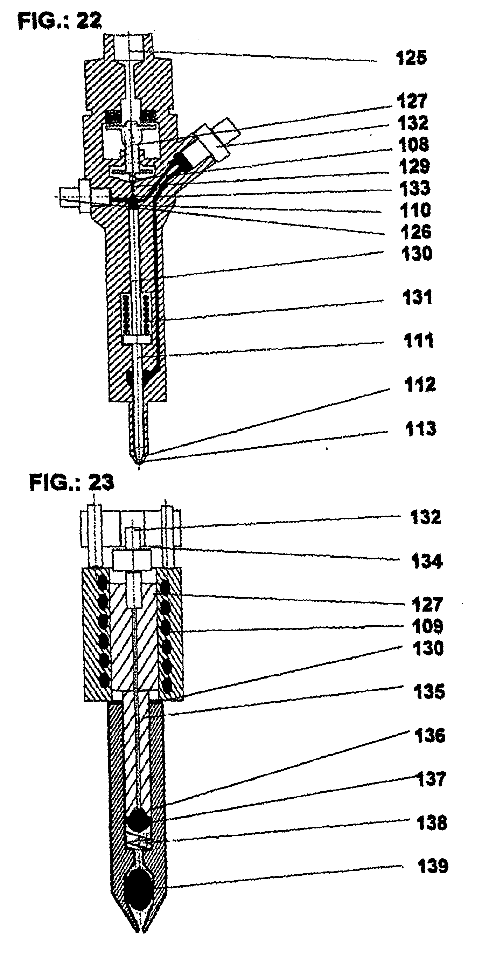

Figur 21 gibt einen einfachen Umbau eines handelsüblichen "common rail injectors" zur Ansicht. Die bereits vorhandenen zwei Bohrungen werden mittels Sondernippel getrennt angespeist.
Figur 22 stellt den Umbau eines handelsüblichen "common rail injectors" mit einer zweiten Bohrung dar. Die Steuermediums Bohrung In der ursprünglichen Zuführung (132) wird verschlossen. Ein zusätzlicher Zugang zur Hochdruckkammer (133) wird gebohrt und ein zweiter Anschlußnippel (126) für das Steuermedium gefertigt.
Figur 23 stellt eine Pumpen-Düsenanordnung dar, wobei die Hochdruckkammer im Bereich der Düse anordnet ist. Das Einspritzmedium wird in einer Bohrung im Stößel (135) zugeleitet und die Pumpenwirkung mittels eines Einlaß- (137) und eines Auslaßventiles (139) erzielt Das Eindringen der Schmelze wird durch die Kugel (139) verhindert. Die Rückholfeder (138) drückt die Kugel (137) in den Sitz.
Der Stößel (135) wird mittels Magnetschwingers (127) hin- und herbewegt. Mittels Endanschlag (134) wird die Tröpfchengröße bestimmt. Die Leckölleitung (140) entorgt das Ausdringende Einspritzmedium.

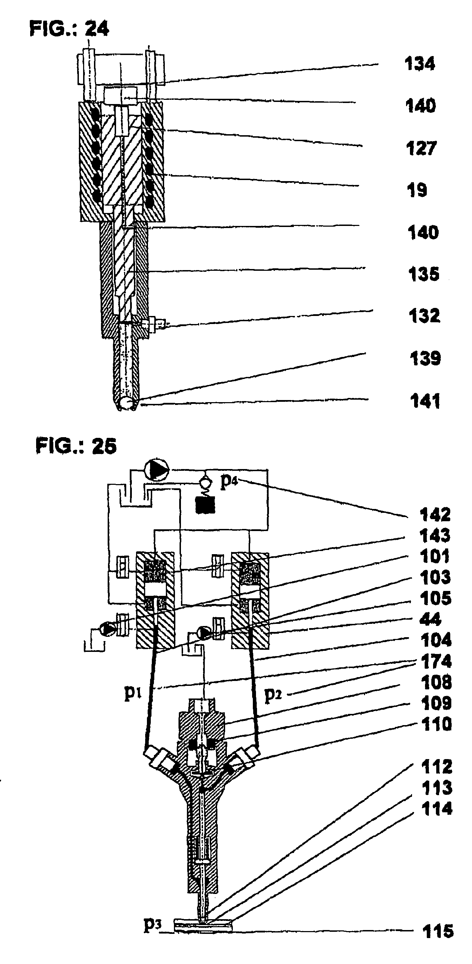

Figur 24 stellt eine Airless Sprühpumpe dar, die sich vom Stand der Technik durch die in der Düse befindlichenventilkugel (139) unterscheidet. Vorteilhaft wird des Düsenvolumen sehr klein gehalten, was mittels Einbördelung (141) des Kugelsitzes erfolgt. (134, 135, 140) wie in Figur 23.
Figur 25 stellt die Hydraulik für einen Stückbetrieb wie zum Beispiel bei Spritzgießmaschinen und Druckgußanlagen dar. Die Betätigung des Injektors erfolgt im Zweikreissystem. Die Druckerhöhung erfolgt mittels des vorhandenen Hydrauliksystems (142). Da es im Stückbetrieb lange Phasen ohne Nutzung der Einspritzung gibt ist hier ein diskontinuierlicher Vorgang aufgezeigt. Die Druckerhöhungszylinder für Einspritzmedium (143) und für Steuermedium (144) werden über das Druckregulierventil (142)während der Einspritzphase mit dem Druck p₄ beaufschlagt. Anschließend werden die Hochdruckseitigen Räume mit den Pumpen (101) für Einspritzmedium und (105) für das Steuermedium gefüllt.

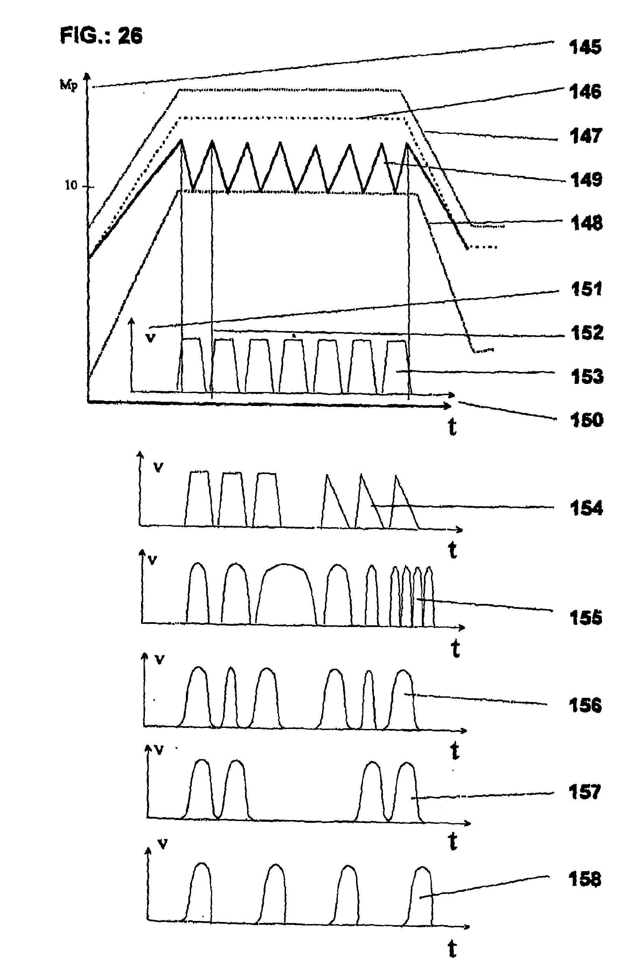

Figur 26 zeigt die Merkmale des Druckverlaufes (x-Achse in Mpa (145) über der Zeit t (150)), für das hier vorgeschlagene Verfahren.
Der Schmelzdruck p₃ wird mittels Kurve (148), der Einspritzdruck p₁ mittels Kurve (146), der Steurmediumadruck p₂ mittels Kurve (147) aufgezeigt. Die Erregerspannung (153) betätigt die elektro-hydraulische Ventilsteuerung mit dem Druck der in Kurve (149) dargestellt ist. Verschiedene Wellenformen für die Erregerspünnung wurde mit (154) Dreiecksform, (155) Halbe Sinusschwingung in unterschiedlicher Frequenz und Phase, (156) Glockenform, (157) Glockenform in unterschiedlicher Phase und (158) unsymmetrische Formen, die mittels frei gestaltbarem Wellenform Generator erzeugt werden.

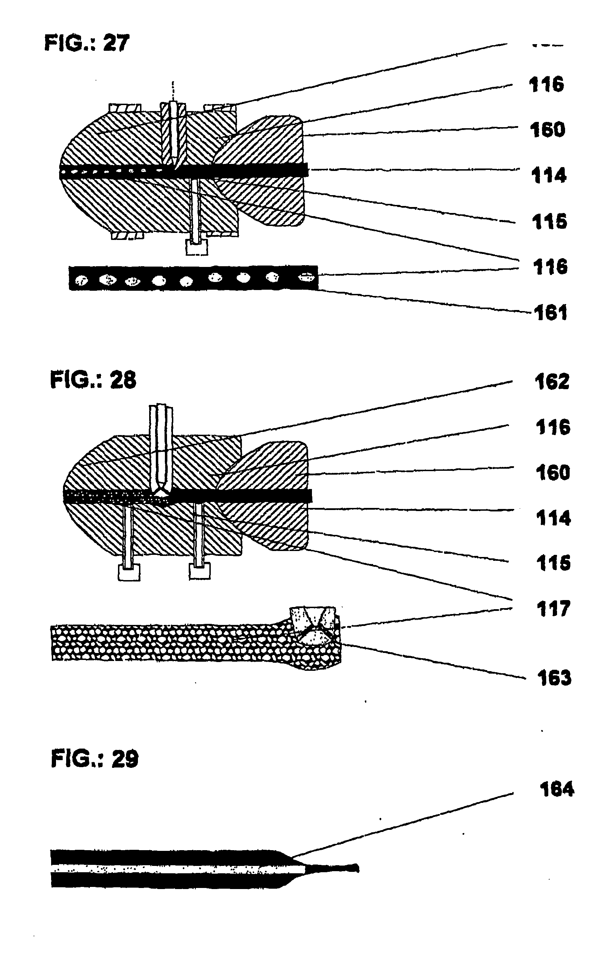

Figur 27, 28 und 29 stellt den Schmelzkanal dar.
Figur 27 zeigt einen parallelen Schmelzkanal (114) mit im Gleichstrom gerichteter Düse im Zwischenstück (116) das zwischen Werkzeug (162) und Spritze (160) liegt. Diese Anordnung ist für die Dotierung von Tröpfchen (161) im Schmelzestrom (114) geeignet.
Figur 28 zeigt eine Sterndüse (163) im Gleich und Gegenstrom für gute Durchmischung der gasbildenden Substanz mit der Schmelze in einem ausgebauchten Schmelzkanal (114), der zusätzlich durch
Geschwinigkeitsveränderung der Schmelze für weitere Durchmischung sorgt.

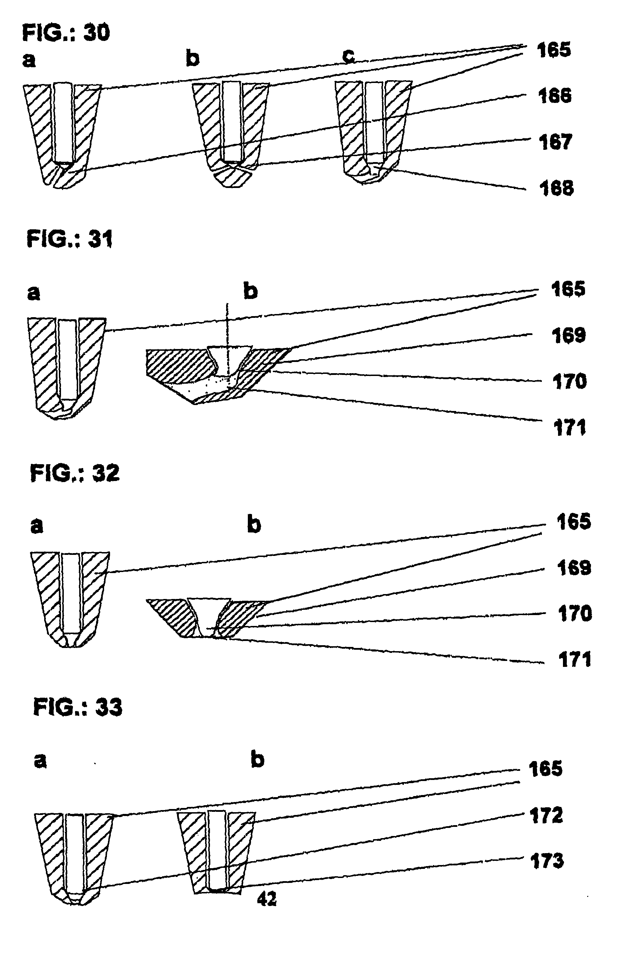

Figur 29 zeigt eine Strangeinbringung (164) In den Düsenkanal. Dies ist für die Einbringung von achsialen Hohlräumen bei Extruder Profilen geeignet.
Figur 30,31 und 32 stellt die Düsen dar, wobei
Figur 30 den Stand der Technik zeichnet.
30a zeigt eine Sitzlochdüse
30b zeigt eine Sternlochdüse
30c zeigt eine Sacklochdüse
Figur 31 zeigt eine Düse die für Gleich- und Gegenstrom Einbringung geeignet ist,
Für die Einbringung der Schmelze als Tropfen wird erfindungsgemäß die Düse nach hydrodynamischen Gesichtspunkten gestaltet. Um eine Zerstäubung zu vermeiden sind strakende Übergänge des Ventilkegels (170) und des Düsen Profiles (171) beabsichtigt.
Figur 32 zeigt eine Düse die quer zur Strömungsrichtung einbringt und für Tröpfchen Dotierung sich eignet.
Figur 33 zeigt eine Düsenform mit Zerstäubung Kegelsitz (172) und Flachsitz (173) die quer zur Strömungsrichtung angeordnet sind.

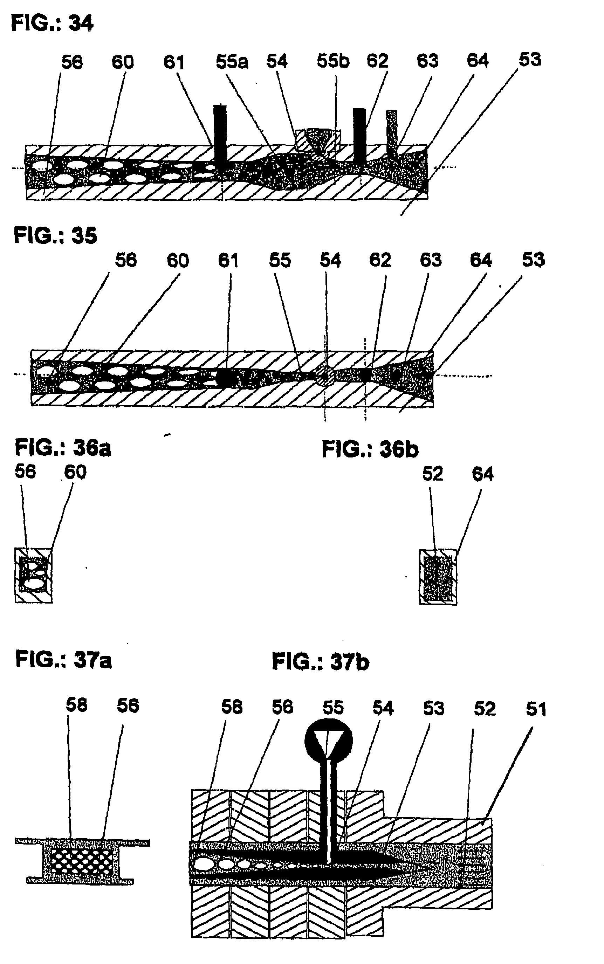

Die Figur 34 zeigt das Detail der Vorrichtung zur Compoundierung eines Schmelzestranges. Dies wird bei Ausführungen von Domen (53) in Profilwerkzeugen (51) oder in Reihenausführung für Werkzeugen zur Herstellung von Platten ausgeführt. Die Ansicht zeigt die gleiche Schnittrichtung wie die Figur 16a und b

Die Fließrichtung ist ebenfalls von links nach rechts dargestellt.
Der Dom (53) ist auf der Einlaufseite als Trichter (64) ausgebildet. In der Einlaufseite ist ein Drucksensor (63) dargestellt, der die Aufgabe hat den Mengenregler (62) und die Dosierpumpensteuerung mit Daten zu versorgen. Die Einbringung ist mit (55b) im Gegenstrom und mit (55a) im Gieichstromprinzip dargestellt. Das Gegenstromprinzip (55b) hat den gesicherten Vorteil, daß die Einbringung in abgeschlossenen nicht verbundenen Dotierungen erfolgen kann. Die Einbringung (4) kann wahlweise auch pulsierend erfolgen. Mit (61) ist beispielhaft eine Schikane zur Umlenkung der Schmelze dargestellt. Die Geschwindigkeitsänderung im Schmelzekanal führt zu Schewirkung und demzufolge zu zusätzlicher Durchmischung. Mit (80) Ist die Expansionszone gezeichnet.

Die Figur 35 zeigt die Vorrichtung aus Figur 34 in einem senkrecht zur Achse liegenden Schnittebene. Die Bezugszeichen haben dieselbe Bedeutung. Bemerkenswert ist die Verengung des Schmelzekanales In diesem Schnitt

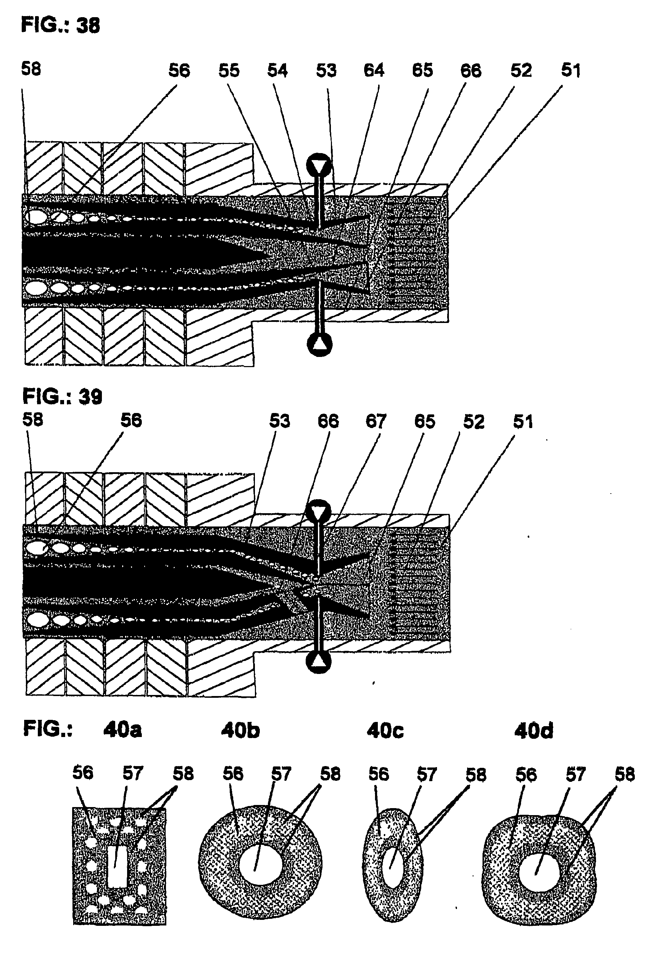

In den Figuren 38a und b ist der Querschnitt an der Austrittsseite der Vorrichtung aus Figur 34 und 35 dargestellt. Mit Figur 36b Ist der Eintritt im Querschnitt gezeichnet.
Die Figuren 37a and 37b zeigen die Ausführung wie In Figur 33a und 33b jedoch für einfache geschäumte Profile, wie zum Beispiel Verkleidungsprofile mit isolationswirkung. Hausverikleidung und Rohre.
Die Bezugszeichen haben dieselbe Bedeutung wie in Figur 33.
Figur 38 zeigt eine Variante der Schmelzkanolgesteltung bis vor zur Verteilerkammer des Werkzeuges. Es sind zwei Einlauftrichter (64), (65) aufgezeigt, die einen mittleren Einlaufbereich (66) der Schmelze zulassen.

Figur 39 zeigt eine Variante der Schmelzkanalfürhung mit einer zentralen Einlaufstelle des Nebenkanals und einer konzentrischen (doppelten) Einbringung der Zuschlagstoffe und einer anschließenden Aufteilung der Schmelze an die verbestimmten Stellen des Profiles. Eine Schmelzführung mit Durchtritt (67) in die Mitte des umströmten Bereichs ist ebenso angedeudet.

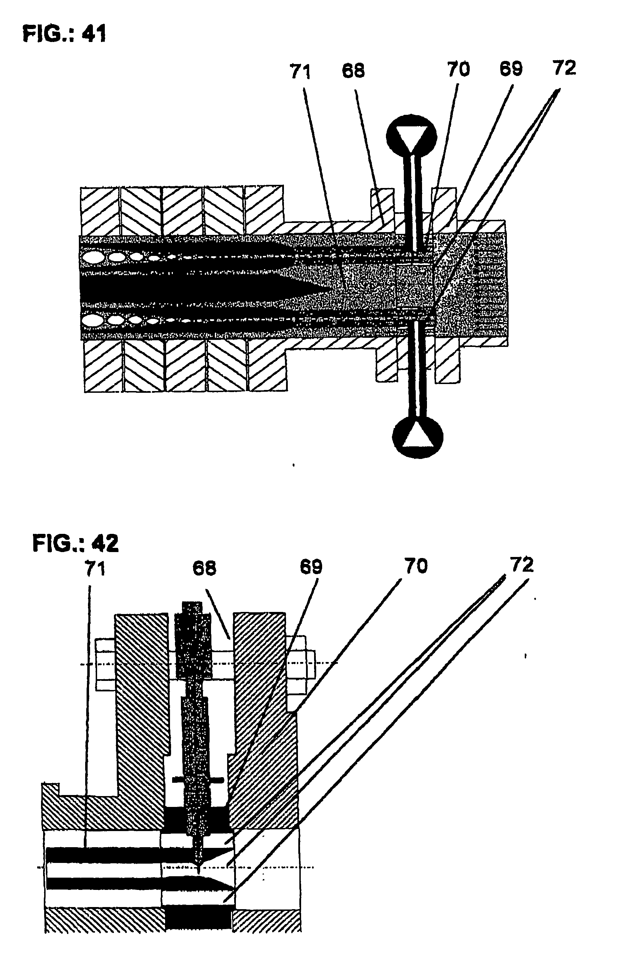

Figur 40 a zeigt ein Rechteckprofil, 40b Kreis, Rohrprofil, 40c elliptisches Profil, 40d rechteck-gerundetes Profil. Dies zeigt mögliche Profilformen mit mehreren Komponenten beispielhaft, die mit den Vorrichtung aus Figur 33, 38, 39 und 41 hergestellt werden insbesonders jedoch einfache Rohrformen.

Figur 41 stellt eine Vorrichtung dar, die als Zusatzeinrichtung in bestehende Extrusionslinlen eingebaut werden kann und die Werkzeuge zu Mehrfach Komponenten Betrieb nachrüsten kann.
Mit (68) ist der Flansch des Werkzeuges, mit (69) der Flansch des Extruders dargestellt.
Mit (70) ist das Zwischenstück der Nachrüstung und (71) die Schmelzkanal Durchtritte markiert.
Figur 42 stellt die Vorrichtung die in Fig. 41 dargestellt ist in Form einer Konstruktionszeichnung dar.
Die Vorrichtung selbst wird mittels der Scheibe (70) zwischen die Flansche (68) und (69) geschraubt. Diese Scheibe enthält die Vorrichtungen zur Einbringung der Zuschlagstoffe aber auch die Blenden (72) zur Abzweigung der Schmelzen. Als Rohr (72) mit Andockfläche zu den hohlen Domen ist die Schmelzekanalführung bis zum Dom angedeutet.

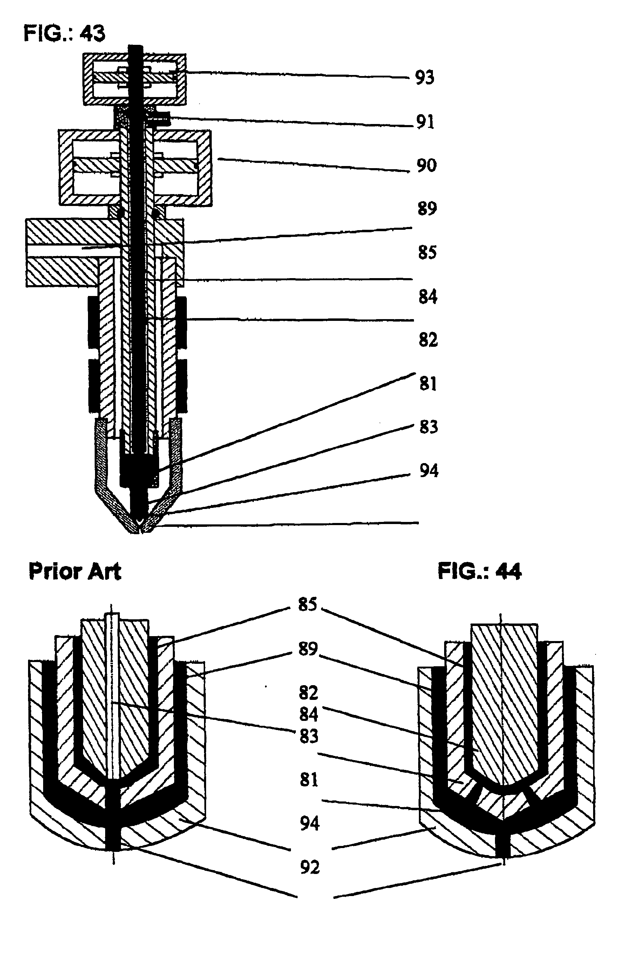

In den Figuren 43 bis 46 sind Heißkanaldüsen für Spritzgießmaschinen dargestellt. Figur 44 zeigt die vorliegende Vorrichtung im Vergleich zum Stand der Technik.

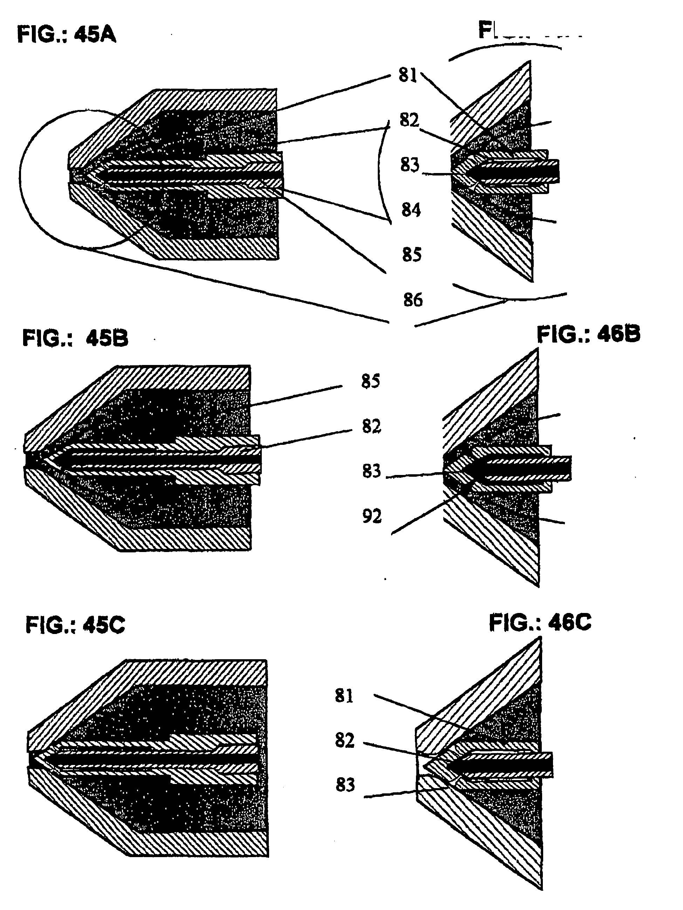

Figur 45 bis 45C zeigt die Betätigung der Nadelspitze.

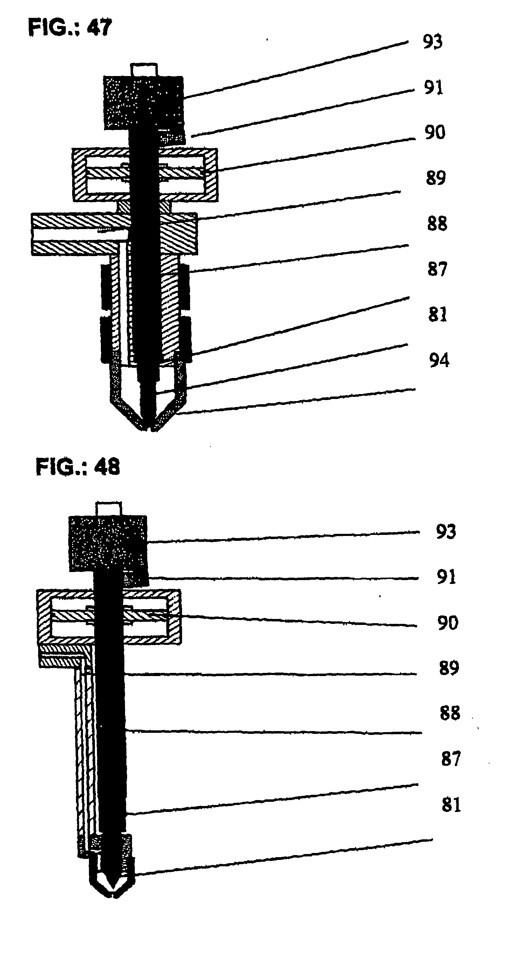

Figur 47 zeigt eine Ausführung mit einem schnell pulsierenden Servo getriebener Nadelbetätigung (CDI Injektor)
Figur 48 zeigt die Integration eines CDI Injektors in die Heißkanaldüse

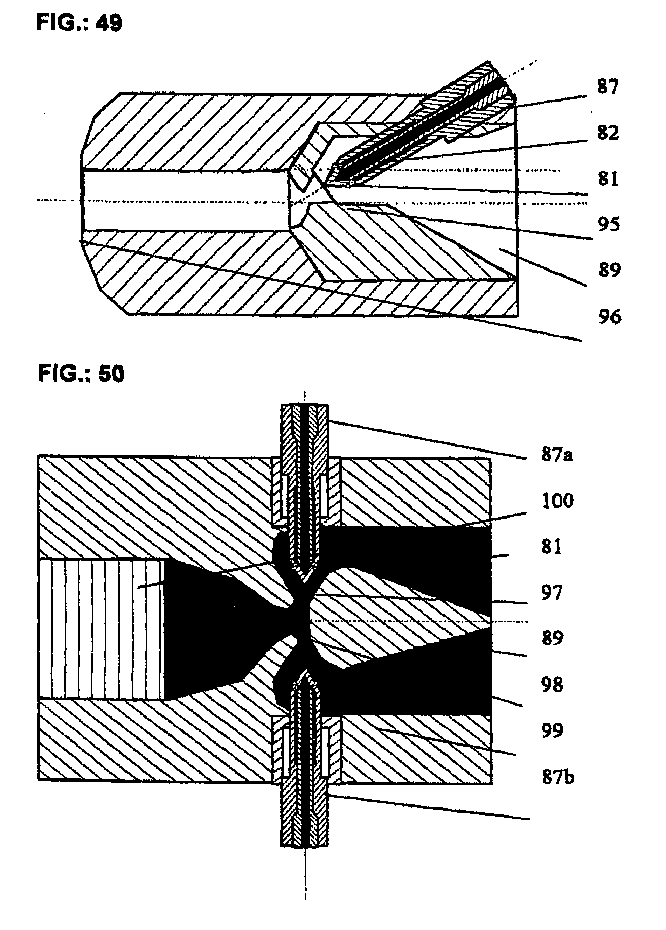

Figur 49 zeigt die Anordnung des Misch- und Dosierkopfes *zum Beispiel* Im Schmelzekanal der Plastifiziereinheit einer Spritzgleßmaschine oder einer Extruders. Figur 50 zeigt die Anordnung einer Zwillingseinheit im Gegenstromverfahren geeignet für flüssig / flüssig-Mischer, aber auch für Extruder vor einem statischen Mischer,

Figur 43 zeigt eine Vorrichtung zum Mischen, Dosieren und Dotieren. Die Innere Düsennadel (82) wird mittels Verstellvorrichtung (93) betätigt und bildet mit dem Einsatzstück (83) eine Sacklochdüse oder eine Sitzlochdüse. Dieses Einsatzstück wiederum ist als äußere Düsennadel ausgebildet und wird mittels der Verstellvorrichtung (90) betätigt. Die Zuführung der Substanz erfolgt in einer Bohrung (85) die wiederum mit einem Anschlußstück (91) verbunden ist Das viskose Medium wird im Kanal (89) zugeführt und gelangt zwischen äußerer Düse (81) und dem Zuführungsstück (94,) beispielsweise ein Heißkanaldüse, eine Plastifiziereinheit oder ein Schmelzekanal in einem Extruder zum Bestimmungsort.

Prior Art: zeigt die Ausführung der inneren Düsennadel als Bolzen (84), der sowohl denn inneren Düsensitz, wie auch den äußeren Düsensitz (94), oder beide, je nach Position ders Bolzens (84) verschließt oder öffnet. Die äußere Düsennadel wird ebenso bewegt und reguliert den Zufluß des äußeren Mediums.

In Figur 44 ist die vorliegende Vorrichtung dargestellt und weist mit dem Düseneinsatzstück (83) im dargestellten Fall die Gestalt eine Sitzlochdüse (VCO) auf. Die Öffnungen in der inneren Düse (83) werden von der Düsennadel (82) im geschlossenen Zustand abgedeckt, Die innere Substanz wird zwischen Düsennadel (82) und Sitzlochdüse (83) zugeführt und wird in die Öffnung in das äußere viskose Medium gedrückt. Je nach Stellung der inneren Düsennadel (82) wird pulsierend, zerstäubend oder injizierend die Substanz (85) In das äußere viskose Medium (89) eingebracht. Die kegelig geformte äußere Düsenadel (83), die zugleich innere Düse ist, schließt die Öffnung in dem Düsensitz des Hotrunners (94) der Plastifiziereinhelt (95) oder dem Schmelzekanal des Extruders (97), bzw. regelt die Öffnung nach dem gewünschten Durchsatz, sodaß eine Dotierung und Mischung der beiden Medien (92) erfolgt.

In der Figur 45A ist die geöffnete Stellung für die Einbringug des äußeren Mediums dargestellt. Die äußere Düsennadel (81) ist geöffnet, die innere Düsennadel (82) ist geschlossen. Die Substanz (85) kann nicht eindringen.

In der Figur 45B ist nun auch die innere Düsennadel (82) geöffnet und gibt die Sitzlochdüse (83) frei und die Innere Substanz (85) strömt in das äußere Medium (92)

In der Figur 45C sind sowohl die innere (82), wie auch die äußere Düsennadel (83) geschlossen dargestellt.

Die Figuren 46A , 46B, 46C korrespondieren mit den Figuren 45A, 45B, 45C nur In vergrößerter Darstellung.

Figur 47 zeigt die Kombination eines CDI Injektors (88) in einem Düseneinsatz als Sitz- oder Sacklochdüse (87), die zugleich die Funktion der Düsennadel im Nadelsitz des Schmelzebereiches übernimmt, die das Mundstück der Heißkanaldüse (94) abschließt. Der CDI Injektor wird mittels Verstellvorrichtung (93) betätigt. Die Innere Düsennadel wird mittlels Solenoid/hydraulik oder piezo/hydraulik Servos betätigt. Die Zuführung der Substanzerfolgt über die Verschraubung (91). Die Schmelze wird über den Kanal (89) zugeführt.

Die Figur 48 unterscheidet sich von der Figur 46 dadurch, daß der Schmelzekanal (89) bis zum Einsatzstück (87) separat geführt wird,

Figur 49 zeigt die Anordnung des Misch- und Dosierkopfes (95) in der Düse einer Plastifiziereinheit (96) einer Spritzgießmaschine. Das Einsatzstück (87) ragt in den Mischkopf (95) und die äußere Düse (81) zugleich Einsatzstück (87) reguliert den Durchfluß der Schmelze (89).

Figur 50 zeigt den Dosier und Mischkopf (98) in einem Rohr, beispielsweise ein flüssig/flüssig Mischer oder einem Schmelzekanal einer Extrusionsmaschine (99).
Die Einsatzstücke (87a, 87b) ragen in die kegeligen Düsensitze des Mischers und verändern als äußere Düsennadel (81) je nach Position die Durchflußmenge der Schmelze (89).
Die Zuführung wird mittels Zuleitungsvorrichtung (97) in den Kegelsitz geleitet. Vorteilhaft erweist sich die zusätzliche. Durchmischung durch den Aufeinanderprall der beiden Strömungswege nach den beiden Mischköpfen.
Wahlweise werden auch in dieser Anordnung 4 Medien miteinander vermischt Wahlweise wird der Misch- und Dosiervorrichtung ein statischer Mischer nachgeschaltet.

## Patentansprüche

1. Anwendung eines Verfahrens zum Einbringen mindestens eines Zuschlagstoffs in ein Medium, durchgeführt in einer Anlage, in der das Medium strömt, wobei
- eine Herstellung von Pellets aus einer extrudierbaren Stoffmasse,
- eine Verbrennung eines Brennstoffs in einem Luftstrom,
- ein Farbspritzen mit einem Farbstoff transportierenden Luftstrom,
- eine Herstellung von geschäumtem Metall aus einer extrudierbaren Metallschmelze
jeweils eine Verwendung der Anlage ist, bei der das strömende Medium durch die extrudierbare Stoffmasse, die Luft für den Brennstoff, die Luft mit dem oder für den Farbstoff bzw. die Metallschmelze gebildet ist, und das Verfahren unter Verwendung von mindestens einem Injektor, mit dem der Zuschlagstoff bzw. einer der Zuschlagstoffe mit einem Druck grösser als 40 MPa durch pulsierende Einspritzung in das Medium in Relation zu dessen Volumenstrom dosiert wird, wobei jeder Injektor mindestens eine Düse umfasst, in der eine Düsennadel mit einer Nadelsteuerung, eine vorgegebene Pulsfrequenz und Spritzdauer bewirkend, gesteuert bewegt wird, der Zuschlagstoff in den Injektor unter einem Druck eingespeist wird, bei dem der Zuschlagstoff aus jeder Düse so tief in das strömende Medium eindringt, dass eine weitgehend homogene Durchmischung erzielbar ist, und wobei die Nadelsteuerung wahlweise mit einem der folgenden Mitteln ausgeführt wird: mittels einem elektro-hydraulischen, mit Solenoid betätigten Servoventil, mittels einem piezoelektrischen Aktuator, mittels pneumatischen Mitteln, mittels hydraulischen Mitteln, mittels einem Magnetfeld, das die Düsennadel von Aussen betätigt, oder mittels einem Linearantrieb, der die Düsennadel antreibt.

2. Anwendung eines Verfahrens nach Anspruch 1, **dadurch gekennzeichnet, dass** mindestens eine Betriebsgröße des Zuschlagstoffes oder des Mediums geregelt wird, wobei Betriebsgrößen des Zuschlagstoffes dessen Temperatur und Druck sowie die Pulsdauer und Frequenz der pulsierende Injektion sind und Betriebsgrößen des Mediums dessen Temperatur, Druck oder Massenstrom sind.

3. Anwendung eines Verfahrens nach Anspruch 1 oder 2, **dadurch gekennzeichnet, dass** der Zuschlagstoff in einem geschmolzenen, pastösen, plastischen, flüssigen, gelösten, dispergierten, emulgierten Zustand oder in Kombinationen solcher Zustände in das Medium eingebracht wird und dass das Medium in Form von Gas, Flüssigkeit, Schmelze, Paste, Lösung, Dispersion, Emulsion, fluidisiertem Schüttgut oder einer Kombination dieser Formen vorliegt.

4. Anwendung eines Verfahrens nach einem der Ansprüche 1 bis 3, **dadurch gekennzeichnet, dass** der Zuschlagstoff ein Additiv ist, beispielsweise ein Härter, Farbstoff, Gasbildner oder Weichmacher, welches Additiv in eine Kunststoffschmelze, eine Metallschmelze oder ein fluidisiertes Material genau dosiert eingebracht und mit diesem Medium vermischt wird.

5. Anwendung eines Verfahrens nach einem der Ansprüche 1 bis 4, **dadurch gekennzeichnet, dass** der Zuschlagstoff, nämlich ein Brennstoff oder Farbstoff, in Heiz- und Brenneranlagen bzw. in Airless-Spritzanlagen pulsierend in einen Luftstrom (39) eingespritzt wird.

6. Verwendung einer Vorrichtung zum Einbringen von mindestens einem Zuschlagstoff in ein strömendes Medium unter Anwendung des Verfahrens gemäss einem der Ansprüche 1 bis 5, **dadurch gekennzeichnet, dass** der pulsierend betätigte Injektor in den Strömungsbereich hineinragend angeordnet ist und dass eine Einspritzdüse mindestens eine Einspritzöffnung aufweist, deren Durchmesser einen Wert zwischen 0,08 bis 0,2mm hat - je nach erforderlicher Eindringtiefe des in das Medium einzubringenden Zuschlagstoffs.

7. Verwendung einer Vorrichtung nach Anspruch 6, **dadurch gekennzeichnet, dass** der Injektor(128) mit einer Injektionsdüse (113) so ausgeführt ist, dass die Injektionsdüse mit einem Steuerventil (112) in unmittelbarer Verbindung steht, die an mindestens eine druckgeregelte und druckführende Zuleitung, einen "Common Rail", angeschlossen ist.

8. Verwendung einer Vorrichtung nach Anspruch 6, **dadurch gekennzeichnet, daß** das strömende Medium eine Schmelze ist, dass ein Steuermedium eines hydraulischen Steuerkreislauf (104) von einem Einspritzmedium - dem einzutragenden Zuschlagstoff - getrennt ist, und daß der Druck (102) des Einspritzmediums und/oder des Steuermediums wahlweise mittels einem dynamischen Druckregelventil (102, 106) regelbar ist und mittels einem Steuergerät (122) in Abhängigkeit vom Druck der Schmelze (119) einstellbar ist.

9. Verwendung einer Vorrichtung nach Anspruch 8, **dadurch gekennzeichnet, daß** eine Druckregulierung des Steuermediums (106) und des Einspritzmediums (102) mittels elektrisch betätigtem Druckregulierventil durchführbar ist und mittels einer Steuerung entsprechend einer Auswertung von Drucksensoren (115), in der Schmelze einen Druck p₃, im Steuermedium einen Druck p₂ und im Einspritzmedium einen Druck p₁, einen Druck des Steuermediums (106), über des Einspritzmediums (102) und diesen wiederum über dem der Schmelze (119) reguliert.

10. Verwendung einer Vorrichtung nach einem der Ansprüche 6 bis 9, **dadurch gekennzeichnet, dass** der Injektor durch Umbau eines handelsüblichen, für einen Kraftstoff vorgesehenen Injektor hergestellt ist und der Kraftstoff in diesem sowohl als Steuermedium als auch Einspritzmedium verwendbar ist und daher gemeinsam eingespeist wird, und dass eine Schraubverbindung der KraftstoffZuleitung durch einen Sonder-Nippel ersetzt ist, mit dem ein separate Anspeisung für das Steuermedium und das Einspritzmedium ausführbar ist.

11. Verwendung einer Vorrichtung nach Anspruch 10, **dadurch gekennzeichnet, daß** im umgebauten Injektor in der Kraftstoffzuleitung eine Bohrung für das Steuermedium blind verstiftet ist, somit nur mehr die Bohrung für das Einspritzmedium am Sonder-Nippel anspeisbar ist, und dass für die Anspeisung des Steuermediums eine eigene Bohrung mit Einschraubgewinde für einen zweiten Nippel vorgesehen ist.

12. Verwendung einer Vorrichtung nach einem der Ansprüche 6 bis 9, **dadurch gekennzeichnet, dass** die Düse strömungsgünstig geformt ist für eine Betriebsart, bei der eine tröpfchenförmige Dotierung des strömenden Mediums vorgesehen ist.

13. Verwendung einer Vorrichtung nach einem der Ansprüche 6 bis 9, **dadurch gekennzeichnet, dass** die Düse so geformt ist, dass durch kantige Übergänge (163, 172, 173) und sternförmige (167) Düsenöffnungen eine Zerstäubungswirkung erzielbar ist.

14. Verwendung einer Vorrichtung nach Anspruch 6, **dadurch gekennzeichnet, dass** der Injektor (128) eine Injektionsdüse aufweist, die einen äusseren Düsenkegel und eine äussere, hohle Düsennadel umfasst, wobei ein Hohlraum der Düsennadel in einem vorderen Bereich entweder als Sitzlochdüse oder als Sacklochdüse ausgebildet ist und eine innere Düsennadel enthält, die mit einem kegeligen Sitz formschlüssig dichtet, die Düsennadeln jeweils mit einem zugeordneten Verstellmechanismus betätigbar sind, so dass Menge und Fliessgeschwindigkeit eines aussen fliessenden Mediums dosierbar oder abriegelbar ist, wobei ein Dosieren, Dotieren und Mischen von mindestens einer viskosen Komponente mit einer viskosen Substanz durchführbar ist.

15. Verwendung einer Vorrichtung nach einem der Ansprüche 6 bis 14, **dadurch gekennzeichnet, dass** die Anlage eine Brenneranlage ist, dass diese Brenneranlage ausgerüstet ist mit einem pulsierend betätigten Injektor, der an eine Druckschiene, d.h. einen Common Rail, mit mindestens 40MPa Druck in den Strömungsbereich hineinragend angeordnet ist, dass mindestens eine. Betriebsgröße des Zuschlagstoffes oder des Mediums geregelt wird, wobei Betriebsgrößen des Zuschlagstoffes dessen Temperatur und Druck sowie die Pulsdauer und Frequenz der pulsierende Injektion sind und Betriebsgrößen des Mediums dessen Temperatur, Druck oder Massenstrom sind.
